(19) Europäisches Patentamt
European Patent Office
Office européen des brevets

(11) Veröffentlichungsnummer: **0 121 495**
**B1**

(12) # EUROPÄISCHE PATENTSCHRIFT

(45) Veröffentlichungstag der Patentschrift: **17.12.86**

(51) Int. Cl.⁴: **C 09 B 29/40 // D06P3/16**

(21) Anmeldenummer: **84810104.4**

(22) Anmeldetag: **02.03.84**

(54) **Monoazofarbstoffe, deren Herstellung und Verwendung.**

(30) Priorität: **08.03.83 CH 1246/83**

(43) Veröffentlichungstag der Anmeldung: **10.10.84 Patentblatt 84/41**

(45) Bekanntmachung des Hinweises auf die Patenterteilung: **17.12.86 Patentblatt 86/51**

(84) Benannte Vertragsstaaten: **BE CH DE FR GB IT LI**

(56) Entgegenhaltungen:
**EP-A-0 013 609**
**FR-A-321 521**
**FR-A-670 014**
**FR-A-2 168 488**
**FR-A-2 169 320**
**FR-E-12 465**
**GB-A-284 652**
**US-A-1 835 393**

(73) Patentinhaber: **CIBA- GEIGY AG, Klybeckstrasse 141, CH- 4002 Basel (CH)**

(72) Erfinder: **Hurter, Rudolf, Laufenburgerstrasse 10/3, CH- 4058 Basel (CH)**

**EP 0 121 495 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die der vorliegenden Erfindung zugrunde liegende Aufgabe war es, neue Monoazofarbstoffe zu finden, die zum Färben von natürlichen und synthetischen Polyamiden aus wässrigem Bad geeignet sind, die ferner Nuancen im Bereich Gelb bis Orange haben, und die ausser guten Echtheitseigenschaften, wie z.B. Lichtechtheit, Nassechtheiten und Formaldehydbeständigkeit, insbesondere keinen Thermochromieeffekt aufweisen.

Es wurde nun gefunden, dass die Monoazofarbstoffe der Formel (1) den genannten Anforderungen genügen.

Gegenstand der vorliegenden Erfindung sind somit Monoazofarbstoffe der Formel

FIG1/60

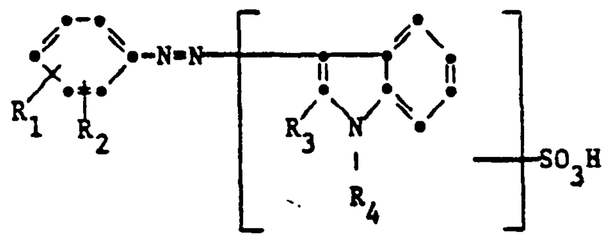

(1),

worin $R_1$ Wasserstoff, $C_{1-4}$-Alkyl, $C_{1-4}$-Alkoxy, Halogen, $C_{2-4}$-Alkanoyl-amino oder ein gegebenenfalls substituierter Arylsulfonyl-, Aryloxy- oder Arylcarbonylrest, $R_2$ Wasserstoff, Halogen, ein gegebenenfalls substituierter Alkyl-, Aryloxy- oder Aryloxysulfonylrest oder ein Rest der Formel

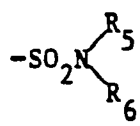

oder

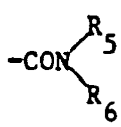

, $R_3$

$R_3$ ein gegebenenfalls substituierter Alkyl- oder Arylrest, $R_4$ Wasserstoff oder Alkyl und $R_5$ und $R_6$ unabhängig voneinander Wasserstoff oder ein gegebenenfalls substituierter Alkyl-, Cycloalkyl- oder Arylrest ist, wobei $R_1$ nicht Wasserstoff, $C_{1-4}$-Alkyl, $C_{1-4}$-Alkoxy oder Halogen sein darf, wenn $R_2$ Wasserstoff, Halogen, ein gegebenenfalls substituierter Alkyl- oder Aryloxysulfonyl-Rest oder ein Rest der Formeln $-SO_2N(R_5)R_6$ oder $-CON(R_5)R_6$ ist.

Bedeutet $R_1$ $C_{1-4}$-Alkyl, so handelt es sich um Methyl, Aethyl, n-Propyl, Isopropyl, n-Butyl, sek.-Butyl, Isobutyl oder tert.-Butyl.

Bedeutet $R_1$ $C_{1-4}$-Alkoxy, so handelt es sich um Methoxy, Aethoxy, n-Propoxy, Isopropoxy, n-Butoxy, sek.-Butoxy, Isobutoxy oder tert.-Butoxy.

Bedeutet $R_1$ $C_{2-4}$-Alkanoylamino, so handelt es sich beispielsweise um Acetylamino, Propionylamino oder Butyrylamino.

Bedeutet $R_1$ einen gegebenenfalls substituierten Arylsulfonyl-, Aryloxy oder Arylcarbonylrest, so bedeutet Aryl vorzugsweise einen Rest der Benzoloder Naphthalinrcihe, der weitersubstituiert sein kann, beispielsweise durch $C_{1-4}$-Alkylgruppen, wie Methyl und Aethyl, $C_{1-4}$-Alkoxygruppen, wie Methoxy und Aethoxy, Halogen, wie Fluor, Chlor und Brom, Alkanoylaminogruppen mit 1 bis 6 Kohlenstoffatomen, wie Acetylamino, und Hydroxy.

Bedeutet $R_1$ und/oder $R_2$ Halogen, so handelt es sich um Fluor, Chlor oder Brom.

Bedeutet $R_2$ einen gegebenenfalls substituierten Aryloxy- oder Aryloxysulfonylrest, so bedeutet Aryl einen Rest der Benzol- oder Naphthalinreihe, der weitersubstituiert sein kann, beispielsweise durch $C_{1-4}$-Alkylgruppen, wie Methyl und Aethyl, $C_{1-4}$-Alkoxygruppen, wie Methoxy und Aethoxy, Halogen, wie Fluor, Chlor und Brom, Alkanoylaminogruppen mit 1 bis 6 Kohlenstoffatomen, wie Acetylamino, und Hydroxy.

Bedeuten $R_2$, $R_3$, $R_5$ oder $R_6$ einen gegebenenfalls substituierten Alkylrest, so handelt es sich unabhängig voneinander vorzugsweise um einen geradkettigen oder verzweigten $C_{1-12}$-Alkyl- insbesondere $C_{1-4}$-Alkylrest, der weitersubstituiert sein kann, z.B. durch Halogen, wie Fluor, Chlor oder Brom, Hydroxy, Cyano, $C_{1-4}$-Alkoxy wie Methoxy oder Aethoxy, und Alkanoylgruppen mit 1 bis 6 Kohlenstoffatomen, wie die Acetyl- oder Propionylgruppe, und die Benzoylgruppe. Der Alkylrest $R_3$ kann auch durch Sulfo substituiert sein. Als Beispiele für $R_2$, $R_3$, $R_5$ und $R_6$ als Alkylrest seien genannt: Methyl, Aethyl Propyl, Isopropyl, Butyl, sek.-Butyl, tert.-Butyl, Isobutyl und Trifluormethyl.

Bedeuten $R_3$, $R_5$ und $R_6$ einen gegebenenfalls substituierten Arylrest, so gehört dieser unabhängig voneinander vorzugsweise der Benzol- oder Naphthalinreihe an, er kann weitersubstituiert sein, beispielsweise durch $C_{1-4}$-Alkylgruppen, wie Methyl, $C_{1-4}$-Alkoxygruppen, wie Methoxy und Aethoxy, Halogen, wie Fluor, Chlor oder Brom, Trifluormethyl, Alkanoylaminogruppen mit 1 bis 6 Kohlenstoffatomen, wie Acetylamino, Hydroxy und Carboxy. Der Arylrest $R_3$ kann auch durch Sulfo substituiert sein. Insbesondere ist $R_3$, $R_5$ und $R_6$ als Arylrest ein Phenylrest, der durch Methyl, Trifluormethyl und Chlor substituiert sein kann.

Bedeutet $R_4$ einen Alkylrest, so kommt vorzugsweise ein geradkettiger oder verzweigter $C_{1-12}$-Alkyl- und insbesondere $C_{1-8}$-Alkylrest in Betracht. Als Beispiele seien genannt: Methyl, Aethyl, Propyl, Isopropyl, Butyl, sek.-Butyl, tert.-Butyl, Isobutyl, Pentyl-(l), Pentyl-(3), Heptyl-(1), Heptyl-(3) und Octyl-(l).

Bedeuten $R_5$ und $R_6$ einen gegebenenfalls substituierten Cycloalkylrest, so kommen unabhängig voneinander vorzugsweise Cycloalkylgruppen mit 5- bis 7-gliedrigen Ringen in Betracht, die weitersubstituiert sein können, z.B. durch $C_{1-4}$-Alkyl, wie Methyl. Insbesondere kommt die Cyclohexylgruppe in Betracht.

Bevorzugt sind Monoazofarbstoffe der Formel (1), worin $R_1$ Wasserstoff, $C_{1-4}$-Alkyl, $C_{1-4}$-Alkoxy, Halogen, $C_{2-4}$-Alkanoylamino, ein gegebenenfalls durch $C_1$-$C_4$-Alkyl oder Halogen substituierter Phenylsulfonyl-, Naphthylsulfonyl-, Phenyloxy- oder Phenylcarbonylrest, $R_2$ Wasserstoff, Halogen, $C_{1-4}$-Alkyl, Trifluormethyl, ein gegebenenfalls durch $C_{1-4}$-Alkyl oder Halogen substituierter Phenoxy- oder Phenoxysulfonylrest,

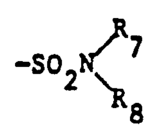

oder

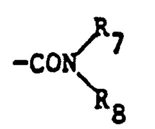
,

$R_3$ $C_{1-4}$-Alkyl oder Phenyl, $R_4$ Wasserstoff oder $C_{1-8}$-Alkyl und $R_7$ und $R_8$ unabhängig voneinander Wasserstoff, $C_{1-4}$-Alkyl, $C_{1-4}$-Hydroxyalkyl, $C_{5-7}$-Cycloalkyl, Phenyl oder durch Halogen, Trifluormethyl oder $C_{1-4}$-Alkyl substituiertes Phenyl ist.

Besonders bevorzugt sind die Monoazofarbstoffe der Formel

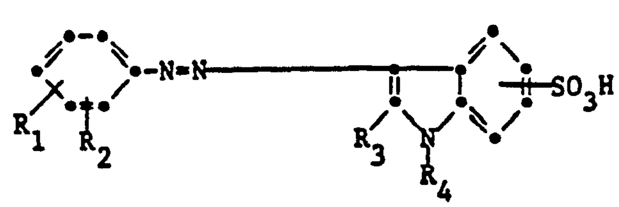
(2),

worin $R_1$, $R_2$, $R_3$ und $R_4$ die unter Formel (1) angegebenen Bedeutungen haben.

Insbesondere bevorzugt sind die Monoazofarbstoffe der Formel (2), worin $R_1$ Wasserstoff, Methyl, Chlor, Methoxy, Aethoxy, o-Methylphenoxy, Phenoxy, Acetylamino, Phenylsulfonyl, p-Methylphenylsulfonyl, p-Chlorphenylsulfonyl, Naphthylsulfonyl, p-Methylbenzoyl oder p-Chlorbenzoyl, $R_2$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylaminosulfonyl, N,N-Dimethylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Aethyl-Nphenylaminosulfonyl, $-CONH_2$ oder $-CON(CH_3)_2$, $R_3$ Methyl oder Phenyl und $R_4$ Wasserstoff, Methyl, Aethyl oder Octyl ist.

Bevorzugt sind ferner die Monoazofarbstoffe der Formel

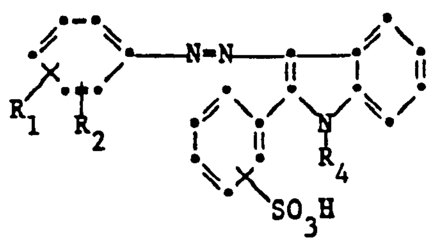

(3) ,

worin $R_1$, $R_2$ und $R_4$ die unter Formel (1) angegebenen Bedeutungen haben, insbesondere die Monoazofarbstoffe der Formel (3), worin $R_1$ Wasserstoff. Methyl, Chlor, Methoxy, Phenoxy, Acetylamino, Phenylsulfonyl Naphthylsulfonyl p-Methylphenylsulfonyl oder p-Chlorphenylsulfonyl, $R_2$ Wasserstoff, Chlor, Trifluormethyl, $-SO_2NH_2$, N-Methyl-N-cyclohexylaminosulfonyl, Phenylaminosulfonyl oder N-Aethyl-N-phenylaminosulfonyl und $R_4$ Wasserstoff oder Methyl ist.

Ebenfalls bevorzugt sind die Monoazofarbstoffe der Formel

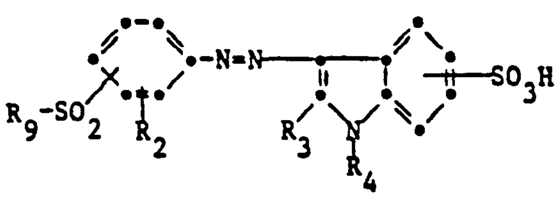

(4) ,

worin $R_2$, $R_3$ und $R_4$ die unter Formel (2) angegebenen Bedeutungen haben und $R_9$ ein gegebenenfalls durch $C_{1-4}$-Alkyl und Halogen substituierter Phenylrest oder Naphthyl ist.

In den Monoazofarbstoffen der Formel (4) bedeuten insbesondere: $R_2$ Wasserstoff, $R_3$ Phenyl, $R_4$ Wasserstoff und $R_9$ Phenyl.

Ein wertvoller Vertreter ist der Monoazofarbstoff der Formel

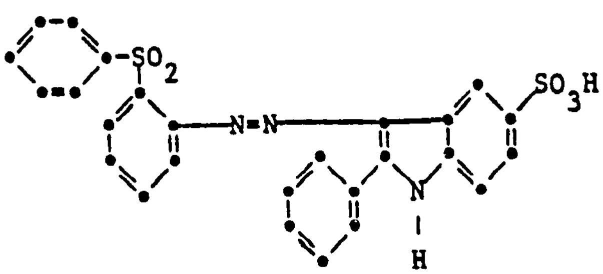

(5) .

Gegenstand der Erfindung ist ferner ein Verfahren zur Herstellung der Monoazofarbstoffe der Formel (1). Das Verfahren ist dadurch gekennzeichnet, dass man eine Diazokomponente der Formel

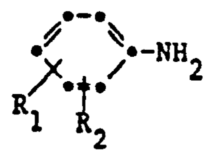

(6)

diazotiert und auf eine Kupplungskomponente der Formel

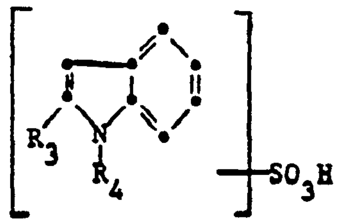

(7)

kuppelt, wobei $R_1$, $R_2$, $R_3$ und $R_4$ in den Formeln (6) und (7) die unter der Formel (1) angegebenen Bedeutungen haben.

Die Diazotierung der Diazokomponente der Formel (6) erfolgt in der Regel durch Einwirken salpetriger Säure in wässrig-mineralsaurer Lösung bei tiefer Temperatur, die Kupplung auf die Kupplungskomponente der Formel (7) bei sauren, neutralen bis alpalischen pH-Werten.

Vorzugsweise verwendet man Diazokomponenten der Formel (6), worin $R_1$ Wasserstoff, $C_{1-4}$-Alkyl, $C_{1-4}$-Alkoxy, Halogen, $C_{2-4}$-Alkanoylamino, ein gegebenenfalls durch $C_{1-4}$-Alkyl oder Halogen substituierter Phenylsulfonyl-, Naphthylsulfonyl-, Phenyloxy- oder Phenylcarbonylrest, $R_2$ Wasserstoff, Halogen, $C_{1-4}$-Alkyl, Trifluormethyl, ein gegebenenfalls durch $C_{1-4}$-Alkyl oder Halogen substituierter Phenoxy- oder Phenoxysulfonylrest,

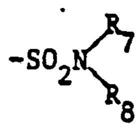

oder

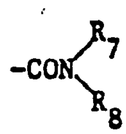

und $R_7$ und $R_8$ unabhängig voneinander Wasserstoff, $C_{1-4}$-Alkyl, $C_{1-4}$-Hydroxyalkyl, $C_{5-7}$-Cycloalkyl, Phenyl oder durch Halogen, Trifluormethyl oder $C_{1-4}$-Alkyl substituiertes Phenyl ist, diazotiert und kuppelt auf eine Kupplungskomponente der Formel (7), worin $R_3$ $C_{1-4}$-Alkyl oder Phenyl und $R_4$ Wasserstoff oder $C_{1-8}$-Alkyl ist; insbesondere verwendet man Kupplungskomponenten der Formeln

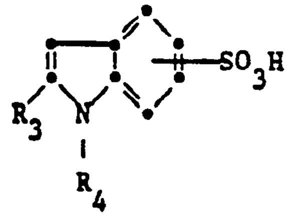

(8) oder

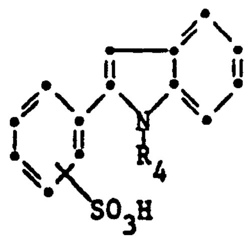

(9) ,

worin $R_3$ und $R_4$ die oben angegebenen Bedeutungen haben.

Eine bevorzugte Ausführungsform ist dadurch gekennzeichnet, dass man eine Diazokomponente der Formel (6), worin $R_1$ Wasserstoff, Methyl, Chlor, Methoxy, Aethoxy, o-Methylphenoxy, Phenoxy, Acetylamino, Phenylsulfonyl, p-Methylphenylsulfonyl, p-Chlor-Phenylsulfonyl, Naphthylsulfonyl, p-Methylbenzoyl oder p-Chlorbenzoyl, $R_2$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylamino-sulfonyl, N,N-Dimethylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaninosulfonyl, N-Aethyl-N-phenylaminosulfonyl, $-CONH_2$ oder $-CON(CH_3)_2$ ist, diazotiert und auf eine Kupplungskomponente der Formel (8), worin $R_3$ Methyl oder Phenyl und $R_4$ Wasserstoff, Methyl, Aethyl oder Octyl ist, kuppelt.

Eine ebenfalls bevorzugte Ausführungsform ist dadurch gekennzeichnet, dass man eine Diazokomponente der Formel (6), worin $R_1$ Wasserstoff, Methyl, Chlor, Methoxy, Phenoxy, Acetylamino, Phenylsulfonyl, Naphthylsulfonyl, p-Methylphenylsulfonyl, oder p-Chlorphenylsulfonyl, $R_2$ Wasserstoff, Chlor, Trifluormethyl, $-SO_2NH_2$, N-Methyl-N-cyclohexylaminosulfonyl, Phenylaminosulfonyl oder N-Aethyl-N-phenylaminosulfonyl ist, diazotiert und auf eine Kupplungskomponente der Formel (9) kuppelt, worin $R_4$ Wasserstoff oder Methyl ist.

Eine weitere bevorzugte Ausführungsform ist dadurch gekennzeichnet, dass man eine Diazokomponente der Formel

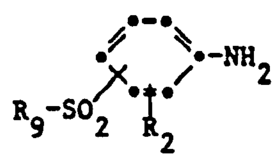

(10) ,

worin $R_2$ die unter Formel (2) angegebene Bedeutung hat und $R_9$ ein gegebenenfalls durch $C_{1-4}$-Alkyl und Halogen substituierter Phenylrest oder Naphthyl ist, diazotiert und auf eine Kupplungskomponente der Formel (8) kuppelt.

Vorzugsweise verwendet man Diazokomponenten der Formel (10) worin $R_2$ Wasserstoff und $R_9$ Phenyl ist, und Kupplungskomponenten der Formel (8), worin $R_3$ Phenyl und $R_4$ Wasserstoff ist.

Der besonders wertvolle Monoazofarbstoff der Formel (5) wird hergestellt, indem man 2-Amino-1,1'-diphenylsulfon diazotiert und auf 2-Phenylindol-5-sulfonsäure kuppelt.

Die Diazokomponenten der Formel (6) sind bekannt und werden nach an sich bekannten Methoden hergestellt.

Aus der grossen Zahl möglicher Diazokomponenten seien folgende als Beispiele genannt: 2-Amino-1,1 -diphenylsulfon, 2-Amino-4-chlor-l-phenyl-2'-naphthyl-sulfon, 2-Amino-4'-methyl-1,1'-diphenylsulfon, 2-Amino-4'-chlor-1,1'-diphenylsulfon, 2-Amino-1-phenyl-2'-naphthylsulfon, 4-Amino-4'-methyl-1,1'-diphenylsulfon, 4-Amino-4'-chlor-1,1'-diphenylsulfon, 4-Amino-1,1'-diphenylsulfon, 4-Amino-1-phenyl-2'-naphthylsulfon, 2-Amino-4,4'-dimethyl-1,1'-diphenylsulfon, 2-Amino-4-methyl-1,1'-diphenylsulfon, 2-Amino-4-methyl-4'-chlor-1,1'-diphenylsulfon, 2-Amino-4,4'-dichlor-1,1'-diphenylsulfon, 2-Amino-4-chlor-4'-methyl-1,1'-diphenylsulfon, 2-Amino-4-trifluormethyl-1,1'-diphenylsulfon, 2-Amino-4-trifluormethyl-4'-methyl-1,1'-diphenylsulfon, 2-Amino-4'-chlor-1,1'-diphenylsulfon-4-sulfamid, 2-Amino-1,1'-diphenylsulfon-4-sulfamid, 2-Amino-4'-methyl-1,1'-diphenylsulfon-4-sulfamid, 2-Amino-4'-methyl-1,1'-diphenylsulfon-4-N-methylsulfamid, 2-Amino-4'-methyl-1,1'-diphenylsulfon-4-N,N-dimethylsulfamid, 2-Amino-4'-methyl-1,1'-diphenylsulfon-4-carbonamid, 2-Amino-4'-chlor-1,1'-diphenylsulfon 4 carbonamid, 2-Amino-4'-methyl-1,1'-diphenylsulfon-4-N,N-dimethyl-carbonamid, 2-Amino-4'-chlor-1,1'-diphenylsulfon-4-N,N-dimethyl-carbonamid, 2-Chlor-5-(4'-methylphenylcarbonyl)-anilin 2-Amino-l-phenyl-2'-naphthylsulfon-4-sulfamid, 2-Chlor-5-(4'-chlorphenyl-carbonyl)-anilin, 2-Trifluormethyl-4-acetylaminoanilin, 2-(2'-Chlor-phenoxy)-5-chloranilin, 2,4-Di-(o-methylphenoxy)-anilin, 2-Phenoxy-anilin-5-N-äthyl-N-phenylsulfamid, 2-(2'-Methylphenoxy)-anilin, 2-Phenoxyanilin, 2-Phenoxy-5-chloranilin.

Aus der grossen Zahl möglicher Kupplungskomponenten seien folgende als Beispiele genannt:

2-Phenylindol-5-, -6- oder -7-sulfonsäure, 2-Methylindol-5-, -6-oder -7-sulfonsäure, 1-Octyl-2-methylindol-5-sulfonsäure, 1-Methyl-2 phenylindol-5-, -6- oder -7-sulfonsäure, 1-Aethyl-2-methylindol-5-, -6- oder -7-sulfonsäure, 1-Octyl-2-methylindol-6- oder -7-sulfonsäure, 2-p-Sulfophenylindol, 2-p-Sulfophenyl-1-methylindol, 2-o-Sulfophenyl-indol, 2-o-Sulfophenyl-1-methylindol.

Die als Kupplungskomponenten eingesetzten 2-Methyl- oder 2-Phenyl-indolsulfonsäuren, welche die Sulfogruppe im Benzolring des Indols enthalten, werden beispielsweise durch Umsetzung von Phenylhydrazinen mit Ketonen nach der Indolsynthese von Fischer hergestellt (vgl. US-Patent 1 866 956), oder die Kupplungskomponenten werden durch Sulfonierung von gegebenenfalls substituierten Indolen gemäss der deutschen Patentschrift 137 117 erhalten. Bei letzterem Verfahren ist erwiesen, dass zumindest bei 2-Phenylindol und 2-Methyl-N-octylindol die Sulfogruppe in 5-Stellung des Indols eintritt.

Die als Kupplungskomponenten eingesetzten 2-Sulfophenylindole, welche in 1-Stellung durch Alkyl substituiert sein können, werden beispielsweise durch Umsetzung von Phenylhydrazinen mit entsprechenden Ketonen nach der Indolsynthese von Fischer hergestellt (vgl. US-Patent 1 866 956).

Die Farbstoffe der Formel (1) eignen sich zum Färben und Bedrucken von Amidgruppen enthaltenden Materialien wie Textilfasern, Textilfäden und -geweben aus Wolle, Seide und Polyurethanfasern, insbesondere aber zum Färben und Bedrucken von synthetischem Polyamid, wobei die üblichen Färbeverfahren angewendet werden.

Sie zeichnen sich durch Brillanz und Farbstärke, gutes Auszieh- und Aufbauvermögen, Beständigkeit gegenüber Formaldehyd und allgemein gute Echtheiten, wie Lichtechtheit, Reibechtheit, Säure- und Alkaliechtheit, Nassechtheiten, insbesondere Wasch-, Wasser-, Heisswasser- und Schweissechtheit, aus und geben egale Färbungen.

Hervorzuheben ist, dass die Farbstoffe der Formel (I) sehr gut mit anderen Säurefarbstoffen kombinierbar sind und sich besonders zum Färben oder Bedrucken nach dem Trichromieprinzip eignen.

Insbesondere hervorzuheben ist, dass die Farbstoffe der Formel (I) Färbungen ergeben, die eine sehr gute Nuancenkonstanz auch bei Temperaturerhöhungen, wie sie z.B. beim Trocknen, Thermofixieren, Dämpfen und Bügeln auftreten, zeigen.

Die Farbstoffe der Formel (1) liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Aus der EP-A-0 013 609, FR-A-670 014, FR-E-12 465, FR-A-2 169 320 und US-A-1 835 393 sind ähnliche Monoazofarbstoffe bekannt, die jedoch nicht alle guten Eigenschaften der erfindungsgemässen Monoazofarbstoffe aufweisen. Aus der FR-A-321 521 und der GB-A-284 652 sind Monoazofarbstoffe bekannt, die sich in charakteristischer Weise von den erfindungsgemässen Monoazofarbstoffen dadurch unterscheiden, dass die Anilin-Diazokomponente unsubstituiert ist oder durch Methyl und Chlor ein- oder zweifach substituiert ist.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

**Beispiel 1**

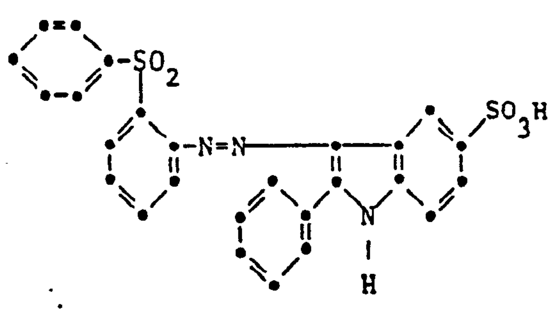

4,66 g 2-Amino-diphenylsulfon werden in 20 ml Essigsäure 80% und 5 ml Salzsäure konz. bei 5-7° mit 5 ml Natriumnitrit 4 n diazotiert. Nach einiger Zeit wird mit 50 ml Eiswasser verdünnt und die trübe Lösung klärfiltriert.

5,46 g 2-Phenylindol-5-sulfonsäure werden in 50 ml Wasser bei Zimmertemperatur verrührt, dann lässt man die oben hergestellte Diazolösung zutropfen. Nach vollendeter Kupplung wird der Farbsstoff abfiltriert, mit Wasser gewaschen und im Vakuum bei 60-70° getrocknet.

Man erhält 8,7 g Farbstoff, welcher auf Zugabe von 0,9 g Soda sehr gut wasserlöslich ist. Aus schwach saurem Bad auf Polyamidmaterial gefärbt, erhält man brillante, gelbstichig orange Farbtöne von vorzüglicher Lichtechtheit, Formaldehyd- und Säurebeständigkeit.

**Beispiel 2**

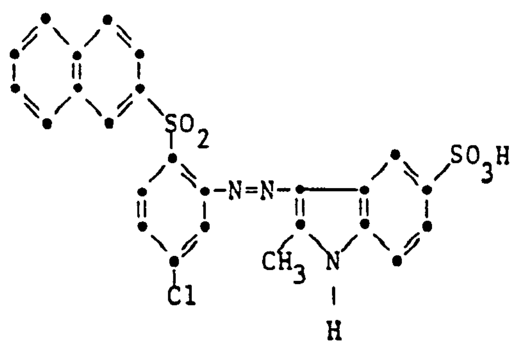

4,76 g 4-Chlor-2-aminophenyl-naphthyl(2)-sulfon werden in 20 ml Sulfolan mit 2,5 ml ca. 40%iger Nitrosylschwefelsäure diazotiert. Die mit 75 ml Wasser verdünnte Lösung wird klärfiltriert.

3 17 g 2-Methylindol-5-sulfonsäure werden in 50 ml Wasser bei Zimmertemperatur gelöst dann lässt man die oben hergestellte Diazolösung zutropfen. Nach einiger Zeit wird der Farbstoff abfiltriert und mit Wasser gewaschen. Das feuchte Nutschgut wird in Wasser mit Natronlauge bei pH 7 in Lösung gebracht und anschliessend mit verdünnter Kochsalzlösung versetzt. Die entstandene Ausfällung wird abfiltriert, mit Soda gewaschen und im Vakuum bei 60-70° getrocknet.

Man erhält 6,5 g Farbstoff, welcher aus schwach saurem Bad auf Polyamidmaterial gefärbt brillante, rotstichig gelbe Farbtöne mit guten Allgemeinechtheiten ergibt.

**Beispiel 3**

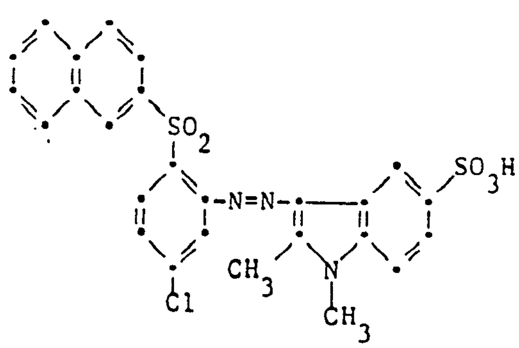

2,7 g Farbstoff aus Beispiel 2 werden mit 2,12 g Soda zusammen in 12 ml Dimethylmethanphosphonat auf 120-130° erwärmt. Nach 3 Stunden werden 60 ml Wasser und 1,2 g Kochsalz zugegeben und bei Raumtemperatur gerührt. Nach dem Filtrieren, Waschen und Trocknen erhält man 1,9 g alkylierten Farbstoff.

Wenn man wie in den Beispieln 1 bis 3 angegeben verfährt jedoch als Diazokomponente und als Kupplungskomponente die in der folgenden Tabelle aufgeführten Verbindungen einsetzt, so erhält man ebenfalls wasserlösliche Farbstoffe, die Polyamid in der angegebenen Nuance mit guten Eigenschaften anfärben.

TABELLE

| Beispiel | Diazokomponente | Kupplungskomponente | Nuance auf Polyamid |
|---|---|---|---|
| 1 | 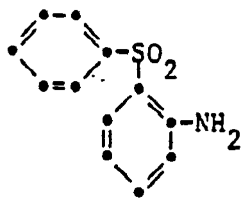 | 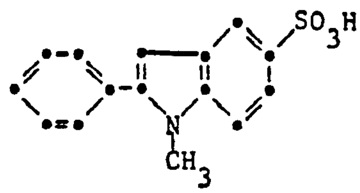 | gelbstichig orange |
| 2 | do. | 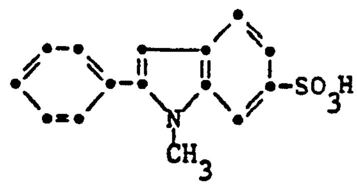 | do. |
| 3 | do. | 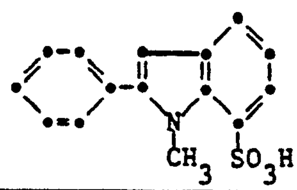 | do. |
| 4 | 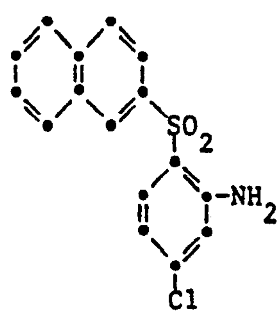 | 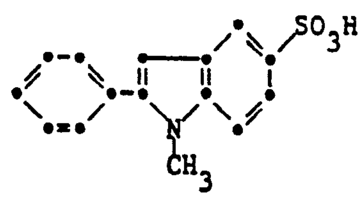 | do. |
| 5 | do. | 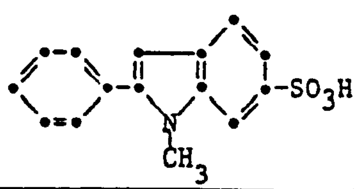 | do. |
| 6 | do. | 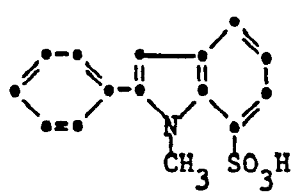 | do. |

| Beispiel | Diazokomponente | Kupplungskomponente | Nuance auf Polyamid |
|---|---|---|---|
| 7 | 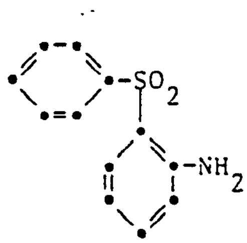 | 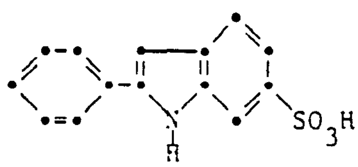 | do. |
| 8 | do. | 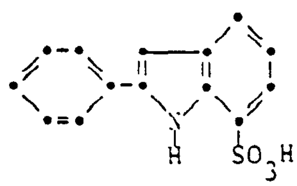 | do. |
| 9 | do. | 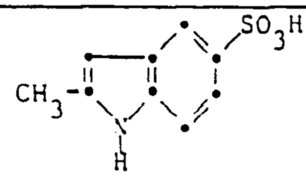 | gelb |

| Beispiel | Diazokomponente | Kupplungskomponente | Nuance auf Polyamid |
|---|---|---|---|
| 10 | 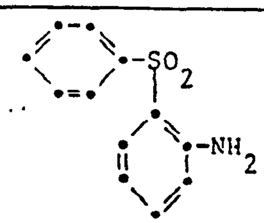 | 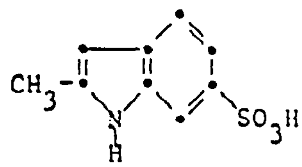 | gelb |
| 11 | do. | 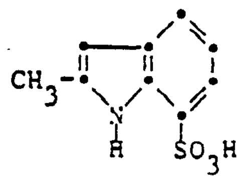 | do. |
| 12 | do. | 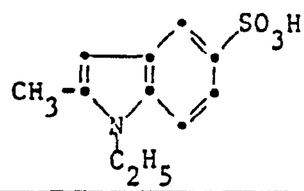 | do. |
| 13 | do. | 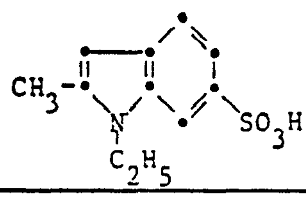 | do. |
| 14 | do. | 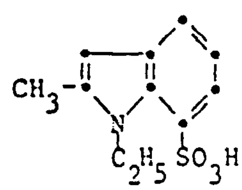 | do. |
| 15 | do. | 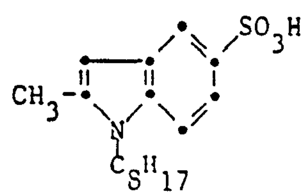 | orange |

| Bei-spiel | Diazokomponente | Kupplungskomponente | Nuance auf Polyamid |
|---|---|---|---|
| 16 | 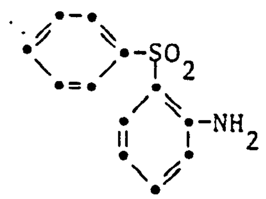 | 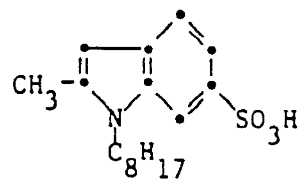 | orange |
| 17 | do. | 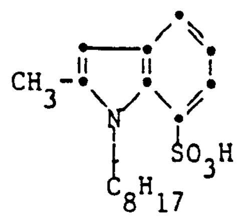 | do. |
| 18 | 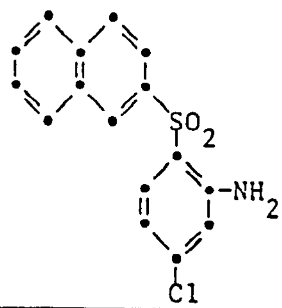 | 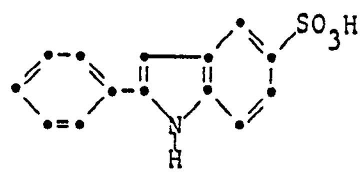 | gelbstichig orange |
| 19 | do. | 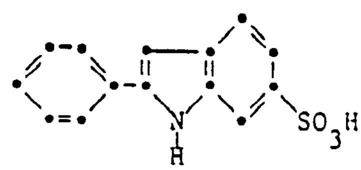 | do. |
| 20 | do. | 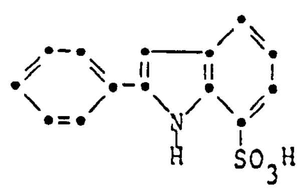 | do. |
| 21 | do. | 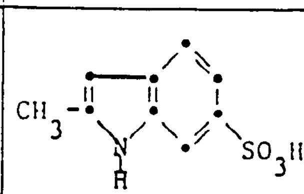 | rotstichig gelb |

| Beispiel | Diazokomponente | Kupplungskomponente | Nuance auf Polyamid |
|---|---|---|---|
| 22 | 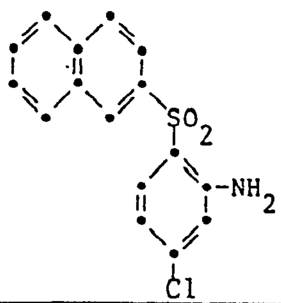 | 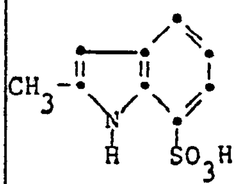 | gelb |
| 23 | do. | 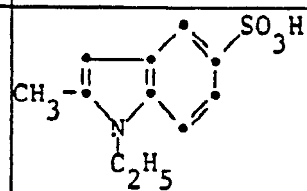 | do. |
| 24 | do. | 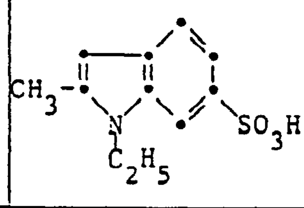 | do. |
| 25 | do. | 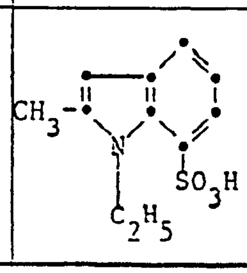 | do. |
| 26 | 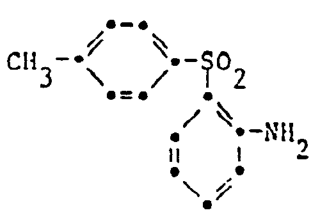 | 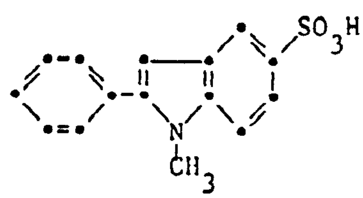 | gelbstichig orange |

| Beispiel | Diazokomponente | Kupplungskomponente | Nuance auf Polyamid |
|---|---|---|---|
| 27 | 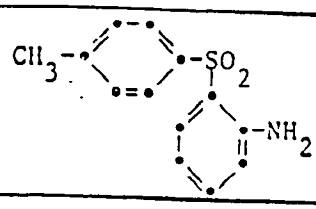 | 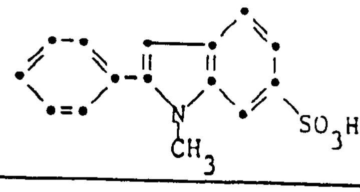 | gelbstichig orange |
| 28 | do. | 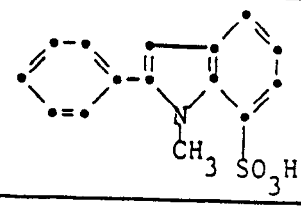 | do. |
| 29 | do. | 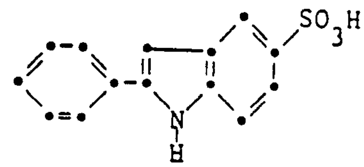 | do. |
| 30 | do. | 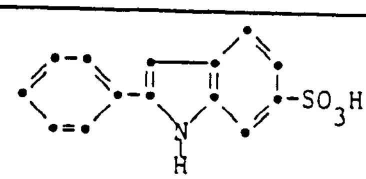 | do. |
| 31 | do. | 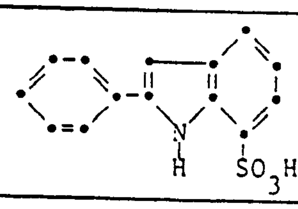 | do. |
| 32 | do. | 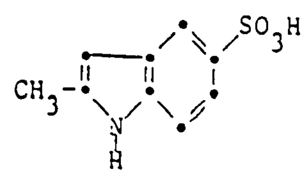 | gelb |
| 33 | do. | 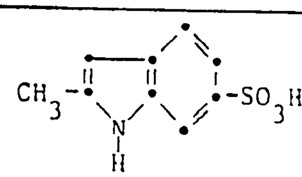 | do. |

| Beispiel | Diazokomponente | Kupplungskomponente | Nuance auf Polyamid |
|---|---|---|---|
| 34 | 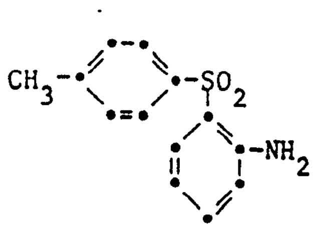 | 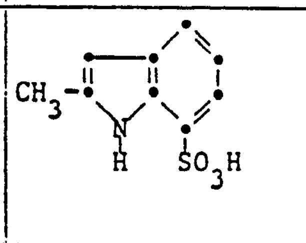 | gelb |
| 35 | do. | 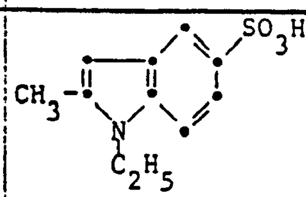 | do. |
| 36 | do. | 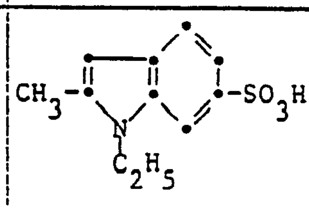 | do. |
| 37 | do. | 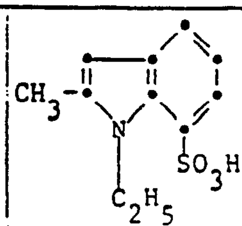 | do. |
| 38 | 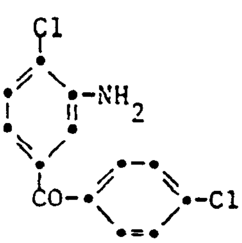 | 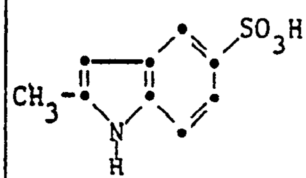 | do. |

| Beispiel | Diazokomponente | Kupplungskomponente | Nuance auf Polyamid |
|---|---|---|---|
| 39 | 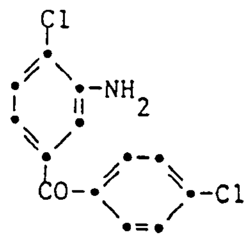 | 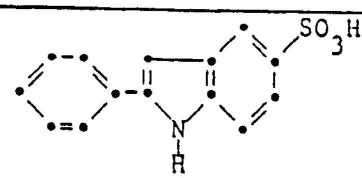 | rotstichig gelb |
| 40 | 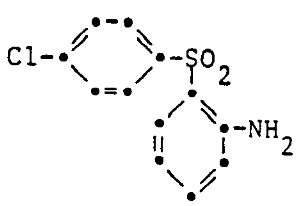 | 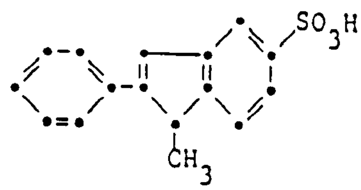 | gelbstichig orange |
| 41 | do. | 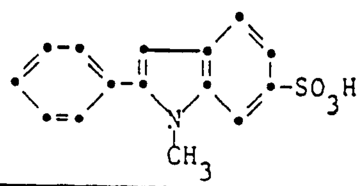 | do. |
| 42 | do. | 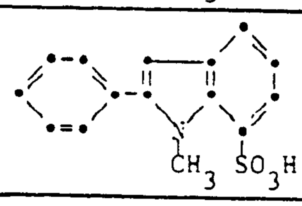 | do. |
| 43 | do. | 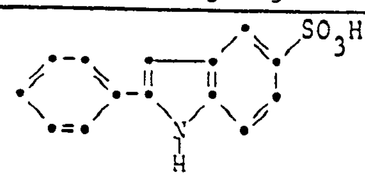 | do. |
| 44 | do. | 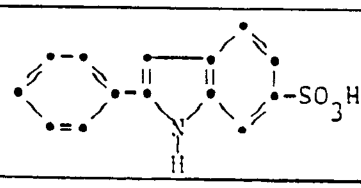 | do. |
| 45 | do. | 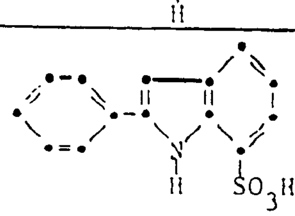 | do. |

| Beispiel | Diazokomponente | Kupplungskomponente | Nuance auf Polyamid |
|---|---|---|---|
| 46 | 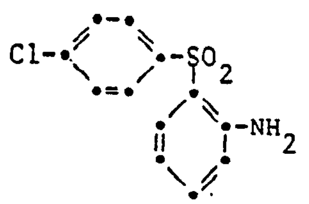 | 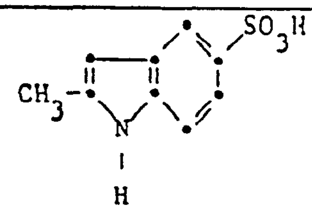 | gelb |
| 47 | do. | 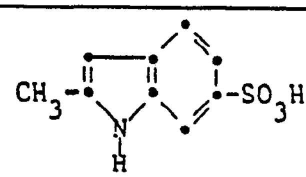 | do. |
| 48 | do. | 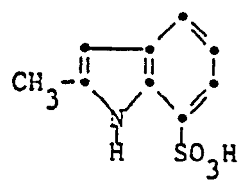 | do. |
| 49 | do. | 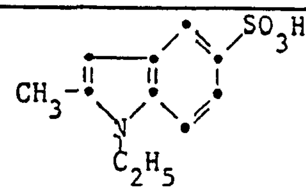 | do. |
| 50 | do. | 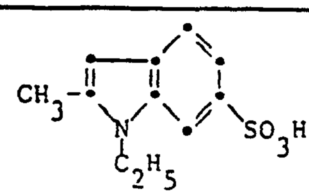 | do. |
| 51 | do. | 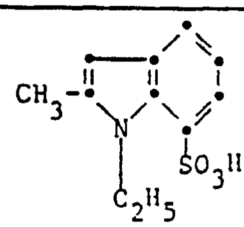 | do. |
| 52 | 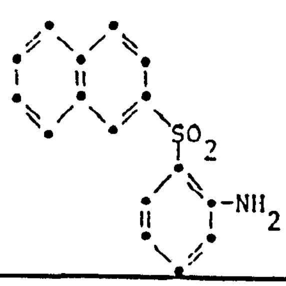 | 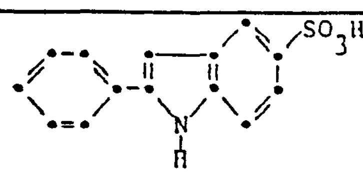 | gelbstichig orange |

| Beispiel | Diazokomponente | Kupplungskomponente | Nuance auf Polyamid |
|---|---|---|---|
| 53 | 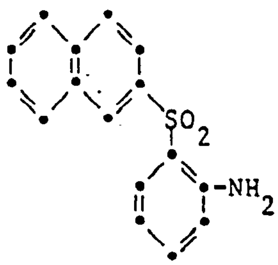 | 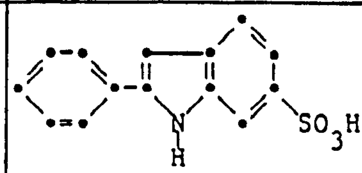 | gelbstichig orange |
| 54 | do. | 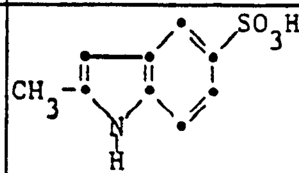 | gelb |
| 55 | do. | 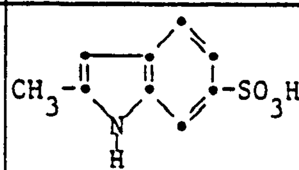 | do. |
| 56 | 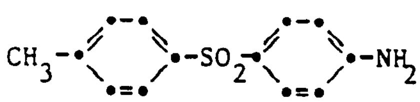 | 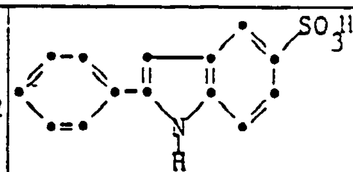 | gelbstichig orange |
| 57 | do. | 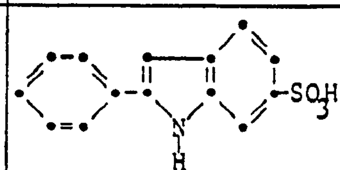 | do. |
| 58 | 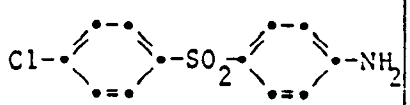 | 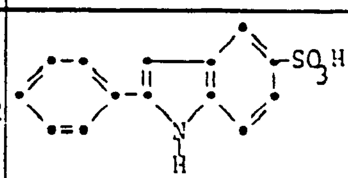 | do. |
| 59 | do. | 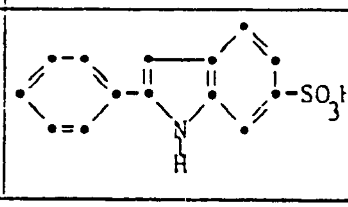 | do. |

| Beispiel | Diazokomponente | Kupplungskomponente | Nuance auf Polyamid |
|---|---|---|---|
| 60 | 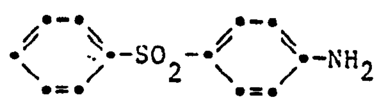 | 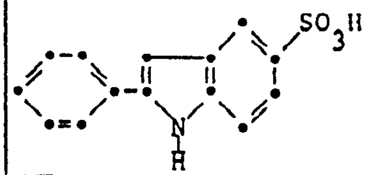 | gelbstichig orange |
| 61 | do. | 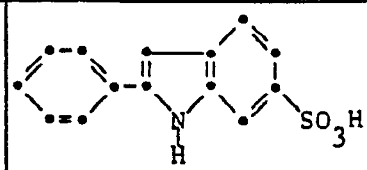 | do. |
| 62 | 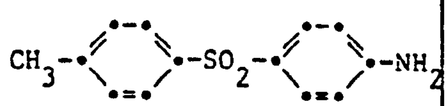 | 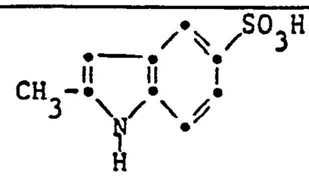 | gelb |
| 63 | do. | 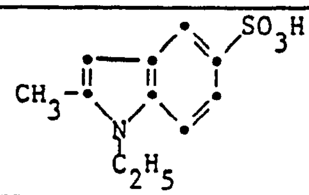 | do. |
| 64 | 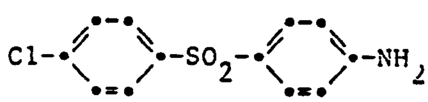 | 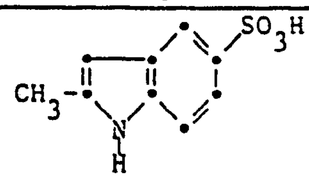 | do. |
| 65 | do. | 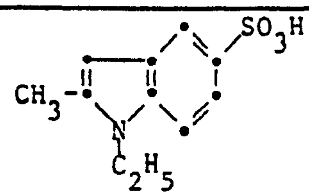 | do. |
| 66 | 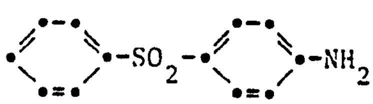 | 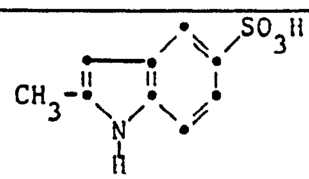 | do. |
| 67 | do. | 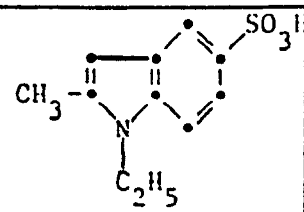 | do. |

| Bei-spiel | Diazokomponente | Kupplungskomponente | Nuance auf Polyamid |
|---|---|---|---|
| 68 | 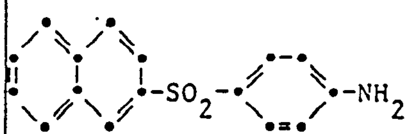 | 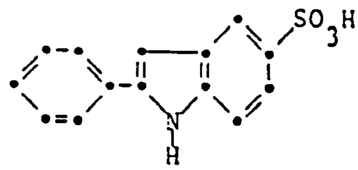 | gelb-stichig orange |
| 69 | do. | 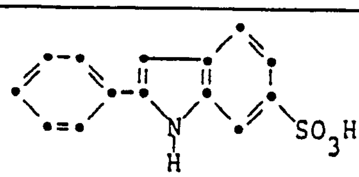 | do. |
| 70 | do. | 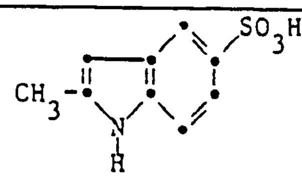 | gelb |
| 71 | do. | 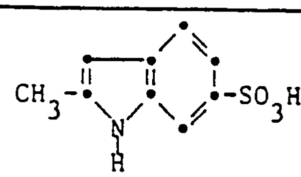 | do. |

| Beispiel | Diazokomponente | Kupplungskomponente | Nuance auf Polyamid |
|---|---|---|---|
| 72 | 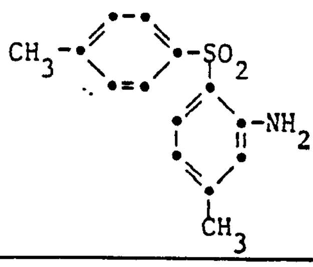 | 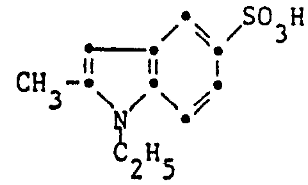 | gelb |
| 73 | do. | 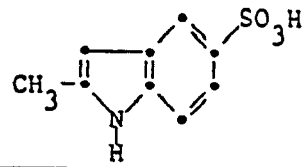 | do. |
| 74 | do. | 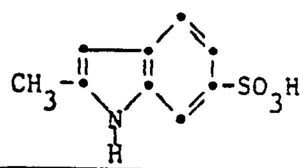 | do. |
| 75 | do. | 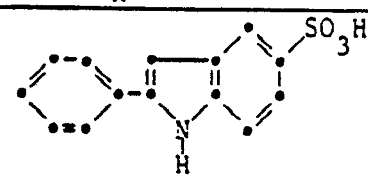 | gelbstichig orange |
| 76 | 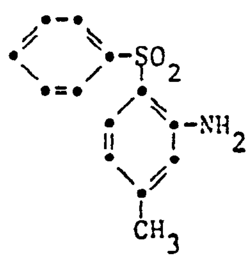 | 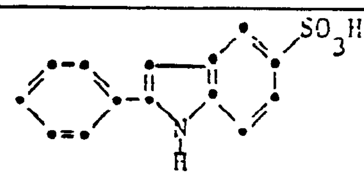 | do. |

| Beispiel | Diazokomponente | Kupplungskomponente | Nuance auf Polyamid |
|---|---|---|---|
| 77 | 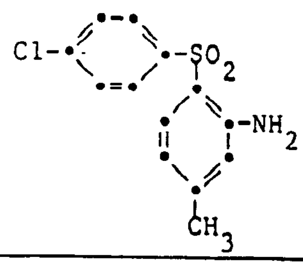 | 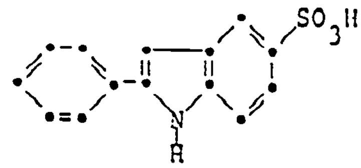 | gelbstichig orange |
| 78 | 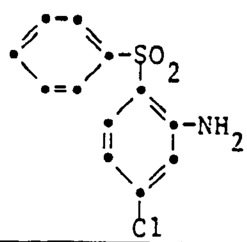 | do. | do. |
| 79 | 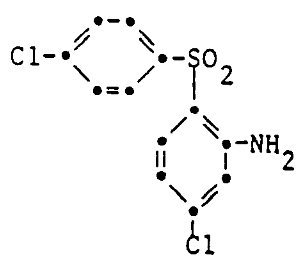 | 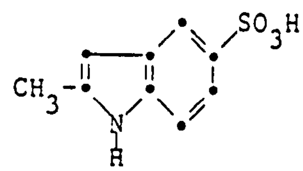 | rotstichig gelb |
| 80 | 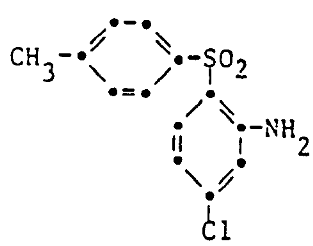 | do. | do. |
| 81 | 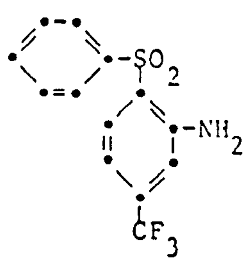 | do. | do. |

| Beispiel | Diazokomponente | Kupplungskomponente | Nuance auf Polyamid |
|---|---|---|---|
| 82 | 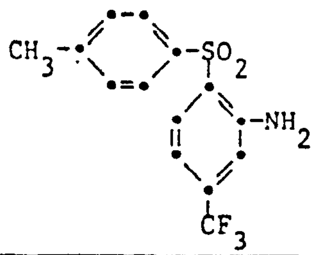 | 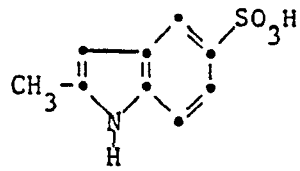 | rotstichig gelb |
| 83 | do. | 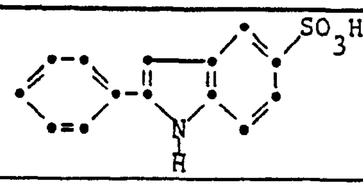 | gelbstichig orange |
| 84 | 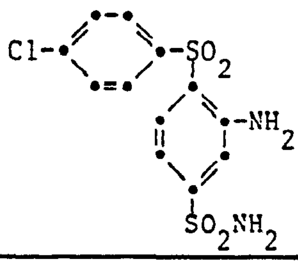 | do. | orange |
| 85 | 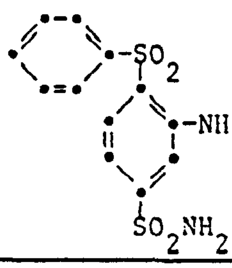 | do. | do. |
| 86 | 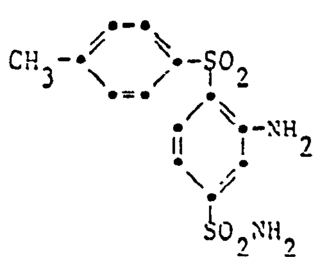 | do. | do. |

| Bei-spiel | Diazokomponente | Kupplungskomponente | Nuance auf Polyamid |
|---|---|---|---|
| 87 | 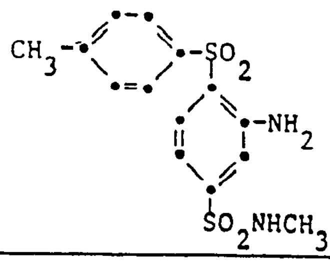 | 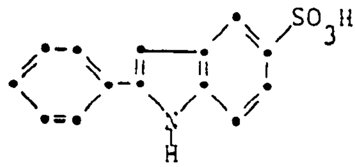 | orange |
| 88 | 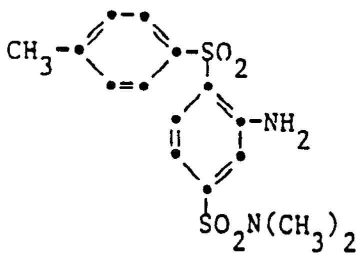 | do. | do. |
| 89 | 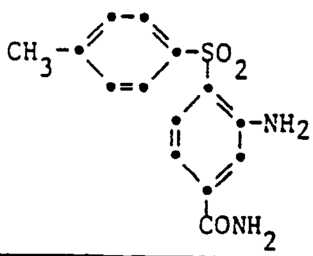 | do. | do. |
| 90 | 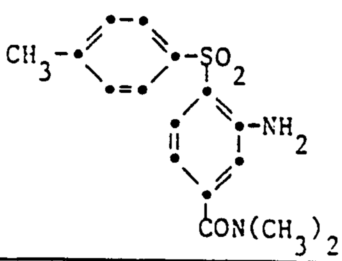 | do. | do. |
| 91 | 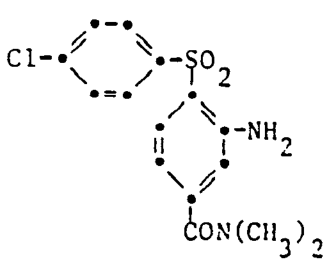 | do. | do. |

| Beispiel | Diazokomponente | Kupplungskomponente | Nuance auf Polyamid |
|---|---|---|---|
| 92 | 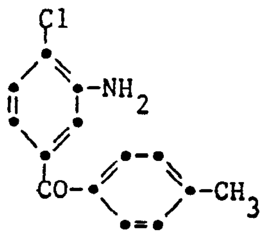 | 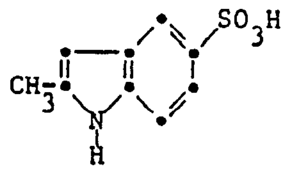 | gelb |
| 93 | 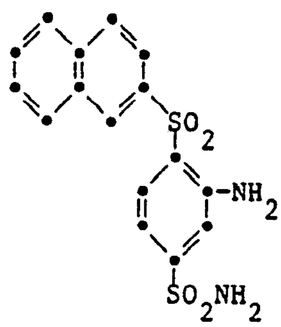 | do | rotstichig gelb |
| 94 | 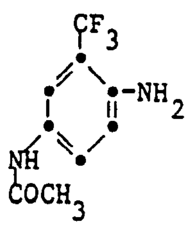 | 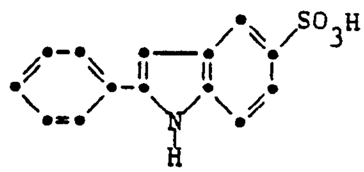 | do. |
| 95 | 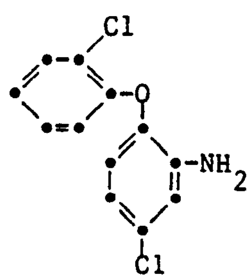 | do | gelbstichig orange |
| 96 | do | 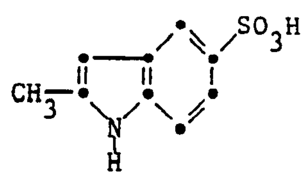 | rotstichig gelb |
| 97 | do | 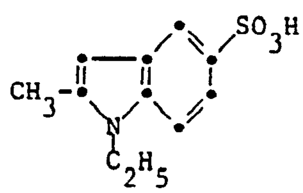 | do. |

| Beispiel | Diazokomponente | Kupplungskomponente | Nuance auf Polyamid |
| --- | --- | --- | --- |
| 98 | 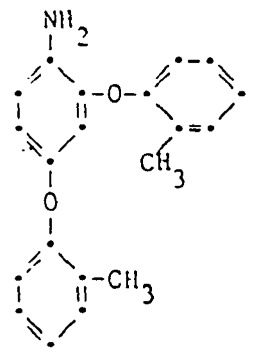 | 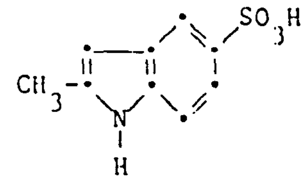 | rotstichig gelb |
| 99 | 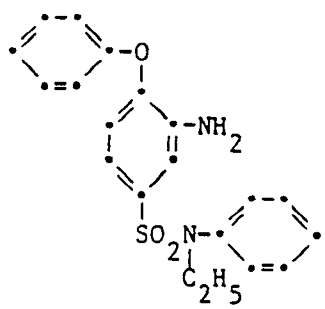 | 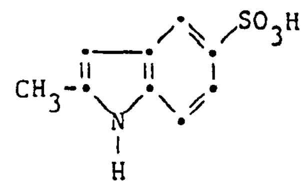 | rotstichig gelb |
| 100 | 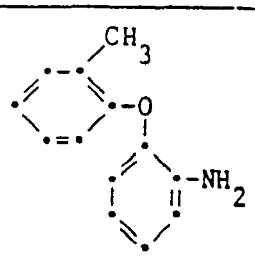 | do. | do. |
| 101 | do. | 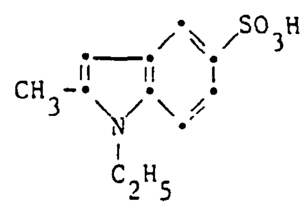 | do. |
| 102 | do. | 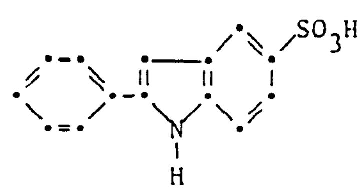 | gelbstichig orange |

| Beispiel | Diazokomponente | Kupplungskomponente | Nuance auf Polyamid |
|---|---|---|---|
| 103 | 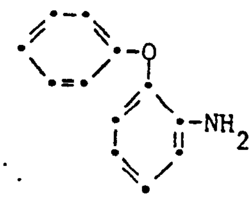 | 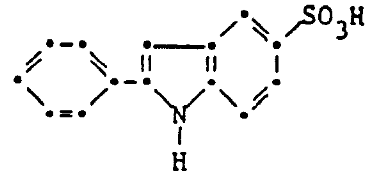 | gelbstichig orange |
| 104 | 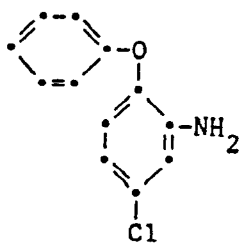 | do. | do. |
| 105 | 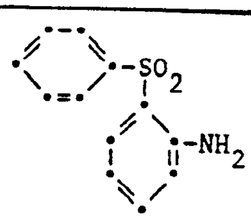 | 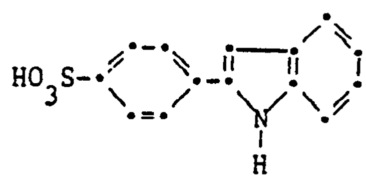 | do. |
| 106 | 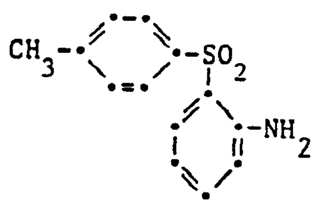 | do. | do. |
| 107 | 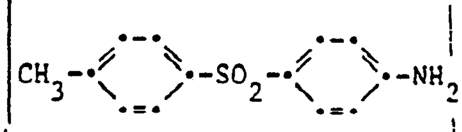 | do. | gelbstichig orange |
| 108 | 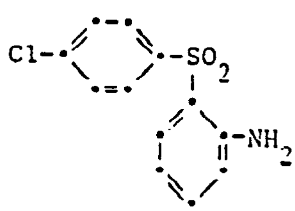 | do. | do. |
| 109 | 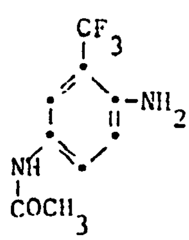 | do. | gelbstichig orange |

| Beispiel | Diazokomponente | Kupplungskomponente | Nuance auf Polyamid |
|---|---|---|---|
| 110 | 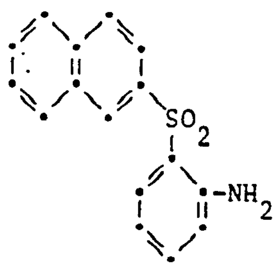 | 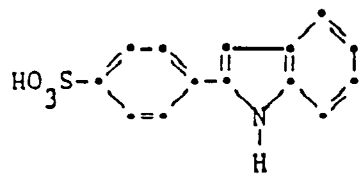 | gelbstichig orange |
| 111 | 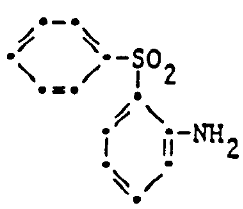 | 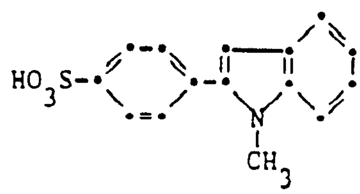 | do. |
| 112 | 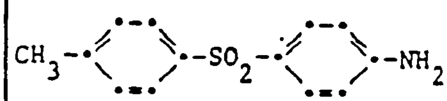 | 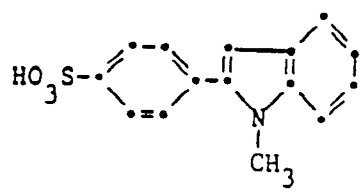 | gelbstichig orange |
| 113 | 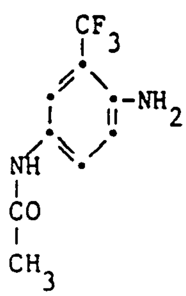 | do. | rotstichig gelb |
| 114 | 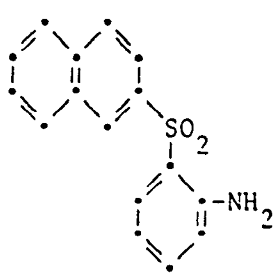 | do. | gelbstichig orange |

| Beispiel | Diazokomponente | Kupplungskomponente | Nuance auf Polyamid |
|---|---|---|---|
| 115 | 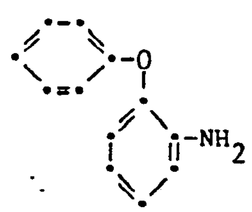 | 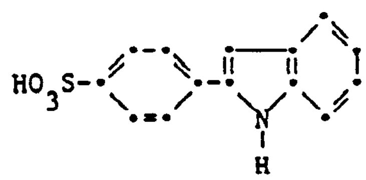 | gelbstichig orange |
| 116 | 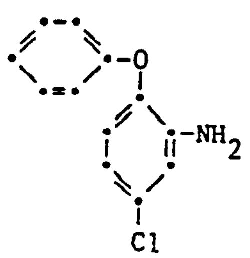 | do. | do. |
| 117 | 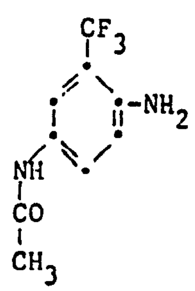 | 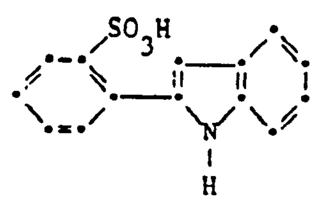 | rotstichig gelb |
| 118 | 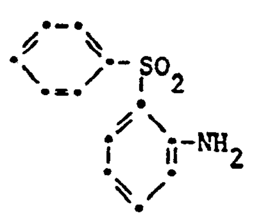 | 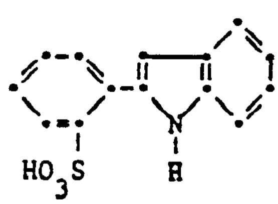 | gelbstichig orange |

| Beispiel | Diazokomponente | Kupplungskomponente | Nuance auf Polyamid |
|---|---|---|---|
| 119 | 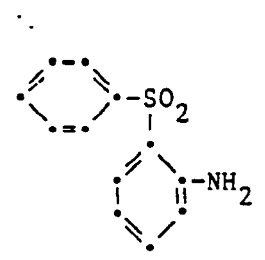 | 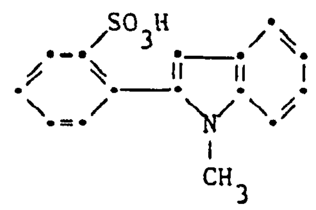 | gelbstichig orange |
| 120 | 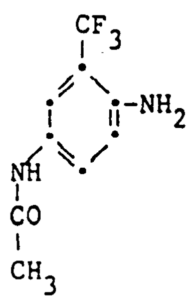 | do. | rotstichig gelb |

**Färbevorschrift I**

Man färbt 10 Teile Helancatrikot in 500 Teilen einer wässerigen Flotte, die 2 g/l Ammonacetat enthält und mit Essigsäure auf pH 5 gestellt wird. Der Anteil des Farbstoffes gemäss Beispiel 1 beträgt 0,7% bezogen auf das Fasergewicht. Die Färbedauer bei einer Temperatur von 98° beträgt 30 bis 90 Minuten. Das gefärbte Helancastück wird anschliessend herausgenommen und wie üblich gewaschen und getrocknet.

Man erhält ein gelbstichig orange gefärbtes Helancastück, das eine reine Nuance und gute Gesamtechtheiten aufweist.

**Färbevorschrift II**

Man färbt 10 Teile Helancatrikot in 500 Teilen einer wässerigen Flotte, die 1 g/l Mononatriumphosphat enthält und mit Dinatriumphosphat auf pH 6 gestellt wird. Der Anteil des Farbstoffes gemäss Tabellenbeispiel 56 beträgt 1%, bezogen auf das Fasergewicht. Die Färbedauer bei einer Temperatur von 98° beträgt 30 bis 90 Minuten. Das gefärbte Helancastück wird anschliessend herausgenommen und wie üblich gewaschen und getrocknet.

Man erhält ein gelbstichig orange gefärbtes Helancastück, das eine reine Nuance und gute Gesamtechtheiten aufweist.

**Färbevorschrift III**

Man färbt 10 Teile Wollstück in 500 Teilen einer wässerigen Flotte. Bezogen auf das Fasergewicht betragen die Anteile an Farbstoff 0.8% gemäss Beispiel 1, an Glaubersalz kalz. 5% und an 96%iger Schwefelsäure 4%. Die Färbedauer bei einer Temperatur von 98° beträgt 30-60 Minuten. Das gefärbte, wie üblich gewaschen und getrocknete Wollstück weise sehr gute Allgemeinechtheiten auf.

**Färbevorschrift IV**

Man färbt 10 Teile einer Wolle/Polyamid-Mischung 50/50 in 500 Teilen einer wässerigen Flotte, die 0,8% Farbstoff gemäss Beispiel I, 5% Glaubersalz kalz., 1% eines Egalisierhilfsmittels, 2% Essigsäure 80 %ig und 2 % eines Retardier- und Egalisierhilfsmittels bezogen auf das Fasergewicht enthält. Die Färbedauer bei einer Temperatur von 98° beträgt 30-60 Minuten. Das wie üblich gewaschen und getrocknete Färbegut ist Ton-in-Ton gefärbt.

**Färbevorschrift V**

Man färbt 10 Teile Helancatrikot in 500 Teilen einer wässerigen Flotte, die 2 g/Liter Ammonacetat enthält und mit Essigsäure auf pH 5 gestellt wird. Als Farbstoffe werden 0,75 % des gelben Farbstoffes der Formel

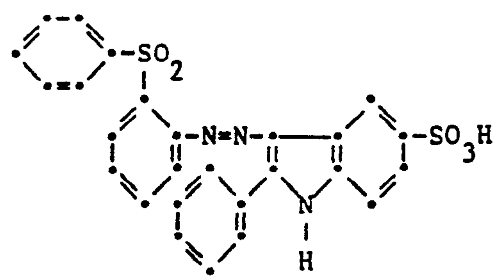

0,8 % des roten Farbstoffes der Formel

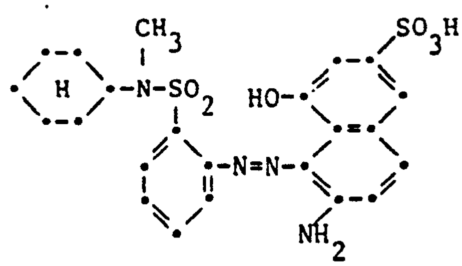

und 0,49 % des blauen Farbstoffes der Formel

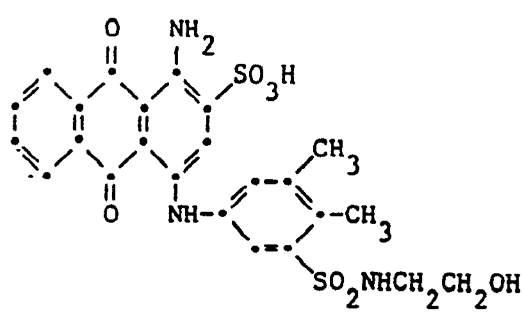

verwendet, wobei sich die Mengenangaben auf das Fasergewicht beziehen. Die Färbedauer bei einer Temperatur von 98° beträgt 30 bis 60 Minuten. Das gefärbte Helancastück wird wie üblich gespült und getrocknet. Man erhält ein in rotstichig bauner Nuance völlig egal gefärbtes Gewebestück, dass keinerlei materialbedingte Streifigkeit aufweist.

**Färbevorschrift VI**

500 m² eines Polyamid (6.6)-Schnittflorteppichs (Veloursware mit Polypropylenbändchenrücken) mit einem Quadratmetergewicht von 535 g werden in einer Flotte, die pro Liter 1 g des Umsetzungsprodukts aus 1 Mol Nonylphenol und 9 Mol Aethylenoxid enthält, kontinuierlich vorgenetzt und dann auf eine Flottenaufnahme von 40 Gewichtsprozent abgesaugt.

In einer Verschäumungsvorrichtung (Mixer) wird aus folgender wässeriger Flotte ein Farbschaum hergestellt, dessen Verschäumungsgrad 1:10 beträgt:

0,45 g/Liter des roten Farbstoffs der Formel

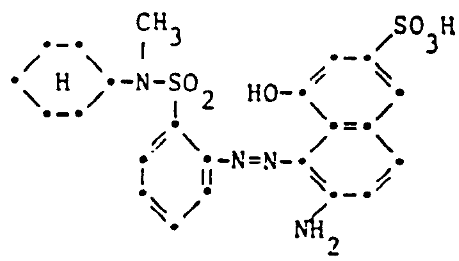

0.9 g/Liter des gelben Farbstoffes der Formel

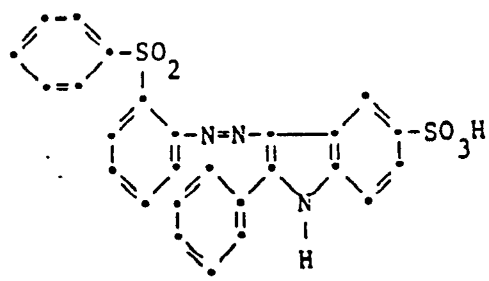

0,3 g/Liter der blauen Farbstoffmischung, welche die Farbstoffe der Formeln

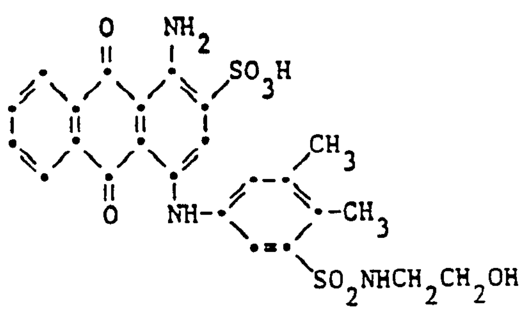

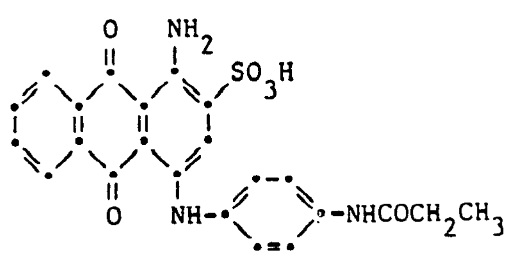

im Verhältnis 1:1 enthält,
2,5 g/Liter eines Schaumstabilisatorgemisches aus Kokosfettsäurediäthanolamid/Nonylphenolpolyglykol(II)äther und Lauryltriglykoläthersulfat-Natrium,
0,6 g/Liter des Siloxanoxyalkylen-Copolymerisates der Formel

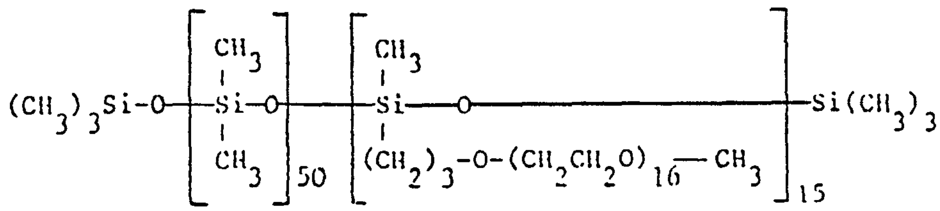

1 g/Liter Natriumacetat, sowie Essigsäure zur einstellung der Flotte auf einen pH-Wert von 6,0.
Dieser Schaum wird dann aus einem Schaumbehälter, der eine verstellbare Rakel für die Einstellung der gewünschten Schaumdicke aufweist, durch die Färbeinlage laufenden Teppichs aufgebracht (Laufgeschwindigkeit 9 m/Minute). Die Schichthöhe des Schaums beträgt 8 mm. Der Farbschaumauftrag beträgt 135%.
Anschliessend durchläuft der Teppich eine Vakuumpassage, in der von der Rückseite her die Schaumschicht teilweise in den Teppich eingesaugt wird (Unterdruck von 0,1 bar), wodurch die Höhe der Schaumschicht etwas reduziert wird. Ueber eine Transportwalze läuft der Teppich dann in einen Dämpfer (102°, Sattdampf), wo ein leichtes Aufschäumen und dann ein Zerstören des Schaums erfolgt. Anschliessend wird der Teppich mit Wasser von etwa 80° abgespritzt, dann abgesaugt und bei 100 bis 130° auf einem Siebtrommeltrockner getrocknet.
Das erhaltene Teppichmaterial ist egal, in einem beigen Farbton gefärbt, zeigt eine hervorragende Durchfärbung, die Weichheit und Bauschigkeit des Materials wird durch das Schaumfärben positiv beeinflusst.

**Färbevorschrift VII (Teppichdruck)**

Ein Velours-Teppichboden aus Polyamid-6 mit einem Gewicht von 350 bis 400 g/m wird mit einer Klotzflotte bestehend aus 988 Teilen Wasser, 10 Teilen Natronlauge 36° Bé und 2 Teilen Netzmittel, auf einem Foulard imprägniert und auf eine Flottenaufnahme von 80% abgequetscht.
Auf den so vorbehandelten Teppich wird mittels einer Düse eine Farbpaste der folgenden Zusammensetzung in Form eines Musters aufgespritzt:
942 Teile Wasser,
50 Teile Verdicker,
3 Teile Antischaummittel
5 Teile des roten Farbstoffes der Formel

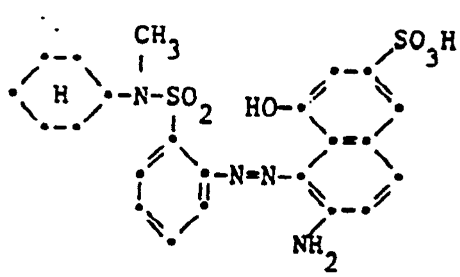

1,5 Teile des gelben Farbstoffes der Formel

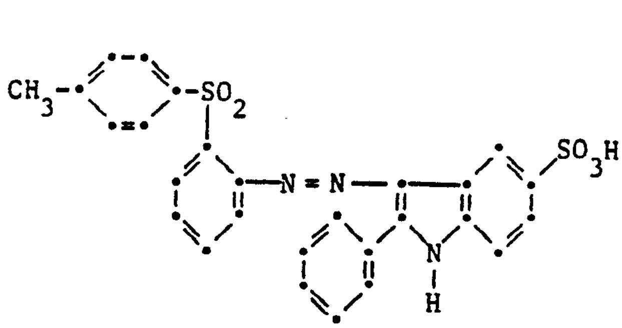

1 Teil der blauen Farbstoffmischung, welche die Farbstoffe der Formeln

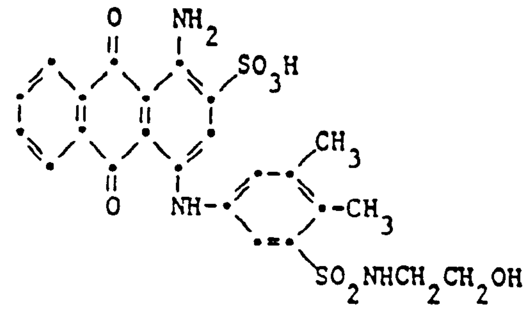

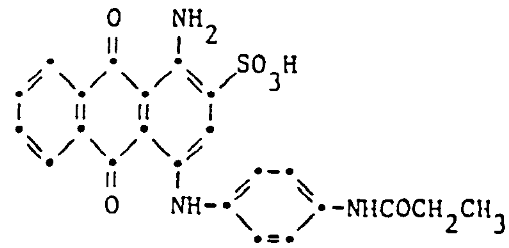

im Verhältnis 1:1 enthält.
Der verwendete Verdicker weist die folgende Zusammensetzung auf:
240 Teile Lackbenzin,
50 Teile Wasser-in-Oel-Emulgator,
20 Teile Oel-in-Wasser-Emulgator,
20 Teile Antischaummittel,
50 Teile vernetztes Carboxyvinylpolymer mit einem Molekulargewicht von ca. 4.000.000
70 Teile lineares Carboxyvinylpolymer mit einem Molekulargewicht von ca. 1.000.000, und
550 Teile Wasser, dessen pH-Wert mit Essigsäure auf 4,5 gestellt wurde.

Das mit der Farbpaste bespritzte Material wird anschliessend während 5 Minuten mit Sattdampf von 101° behandelt zur Fixierung der Farbstoffe, gespült, neutralisiert, erneut gespült und getrocknet.

Man erhält einen Velours-Teppichboden mit einem bordeaux-farbigen Muster mit sehr scharfen Konturen, welcher eine gute Penetration und keinerlei "Frosting" aufweist.

**Färbevorschrift VIII (Teppich-Kontinue-Färbung)**

2,7 Teile des gelben Farbstoffes der Formel

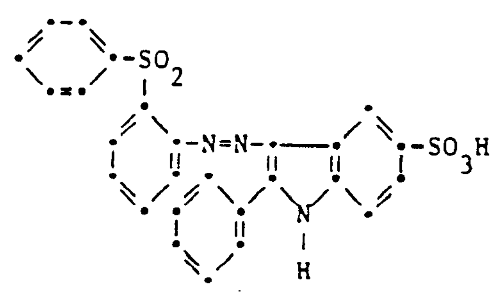

1,2 Teile des roten Farbstoffes der Formel

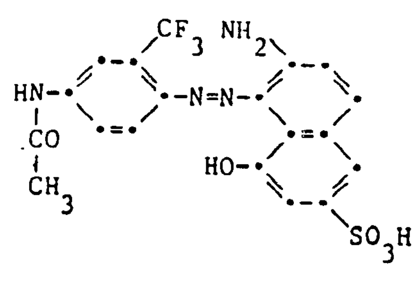

und 1,3 Teile des blauen Farbstoffes der Formel

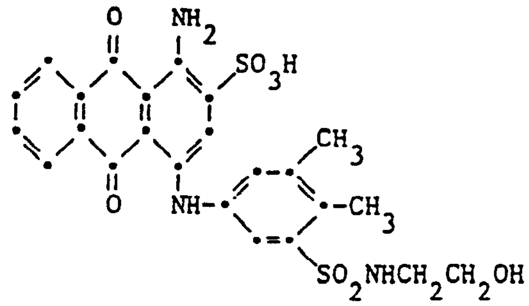

werden in 100 Teilen Wasser durch kurzes Kochen gelöst. Diese Lösung wird hierauf zu einer Lösung, enthaltend 3 Teile eines Verdickungsmittels auf der Basis von Johannisbrotkernmehl, 5,0 Teile eines koazervatbildenden Klotzhilfsmittels auf der Basis eines Kondensationsproduktes einer höher molekularen Fettsäure mit einem Oxyalkylamin, 2,0 Teilen krist. Mononatriumphosphat und 1,0 Teile krist. Dinatriumphosphat in 500 Teilen kaltem Wasser zugegeben. Anschliessend wird mit kaltem Wasser auf 1000 Teile aufgefüllt. Von dieser, einen pH-Wert von 5,5 bis 6,5 aufweisenden Flotte werden 300%, bezogen auf das Teppichgewicht, auf einen Polyamid-Naderflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100° behandelt wird.

Nach dem Waschen in einer Breitwaschmachine erhält man einen in neutral brauner Nuance gefärbten Teppich.

**Patentansprüche**

1. Monoazofarbstoffe der Formel

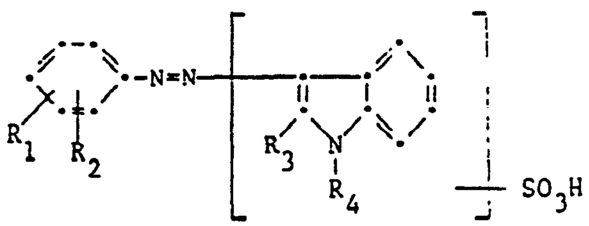

(1),

worin $R_1$ Wasserstoff, $C_{1-4}$-Alkyl, $C_{1-4}$-Alkoxy, Halogen, $C_{2-4}$- Alkanoylamino oder ein gegebenenfalls substituierter Arylsulfonyl-, Aryloxy- oder Arylcarbonylrest, $R_2$ Wasserstoff, Halogen, ein gegebenenfalls substituierter Alkyl-, Aryloxy- oder Aryloxysulfonylrest oder ein Rest der Formel

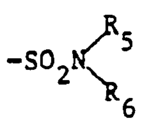

oder

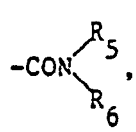

$R_3$ ein gegebenenfalls substituierter Alkyl- oder Arylrest, $R_4$ Wasserstoff, oder Alkyl und $R_5$ und $R_6$ unabhängig voneinander Wasserstoff oder ein gegebenenfalls substituierter Alkyl-, Cycloalkyl- oder Arylrest ist, wobei $R_1$ nicht Wasserstoff, $C_{1-4}$-Alkyl, $C_{1-4}$-Alkoxy oder Halogen sein darf, wenn $R_2$ Wasserstoff, Halogen, ein gegebenenfalls substituierter Alkyl- oder Aryloxysulfonyl-Rest oder ein Rest der Formeln $-SO_2N(R_5)R_6$ oder $-CON(R_5)R_6$ ist.

2. Monoazofarbstoffe gemäss Anspruch 1, worin $R_1$ Wasserstoff, $C_{1-4}$-Alkyl, $C_{1-4}$-Alkoxy, Halogen, $C_{2-4}$-Alkanoylamino, ein gegebenenfalls durch $C_{1-4}$-Alkyl oder Halogen substituierter Phenylsulfonyl-, Naphthylsulfonyl-, Phenyloxy- oder Phenylcarbonylrest, $R_2$ Wasserstoff, Halogen, $C_{1-4}$-Alkyl, Trifluormethyl, ein gebebenenfalls durch $C_{1-4}$-Alkyl oder Halogen substituierter Phenoxy- oder Phenoxysulfonylrest,

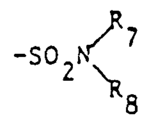

oder

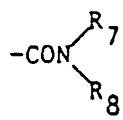

,

$R_3$ $C_{1-4}$-Alkyl oder Phenyl, $R_4$ Wasserstoff oder $C_{1-8}$-Alkyl und $R_7$ und $R_8$ unabhängig voneinander Wasserstoff, $C_{1-4}$-Alkyl, $C_{1-4}$-Hydroxyalkyl $C_{5-7}$-Cycloalkyl, Phenyl oder durch Halogen, Trifluormethyl oder $C_{1-4}$-Alkyl substituiertes Phenyl ist.

3. Monoazofarbstoffe gemäss Anspruch 2 der Formel

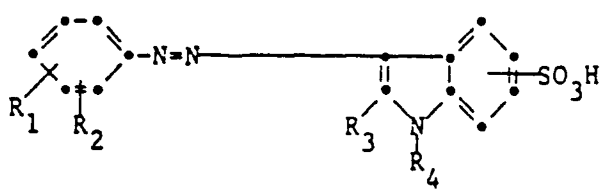

(2),

worin $R_1$, $R_2$, $R_3$ und $R_4$ die in Anspruch 2 angegebenen Bedeutungen haben.

4. Monoazofarbstoffe gemäss Anspruch 3, worin $R_1$ Wasserstoff, Methyl, Chlor, Methoxy, Aethoxy, o-Methylphenoxy, Phenoxy, Acetylamino, Phenylsulfonyl p-Methylphenylsulfonyl p-Chlorphenylsulfonyl, Naphthylsulfonyl, p-Methylbenzoyl oder p-Chlorbenzoyl, $R_2$ Wasserstoff, Chlor, Methyl, Trifluormethyl, o-Methylphenoxy, o-Chlorphenoxy, o-Chlorphenoxysulfonyl, $-SO_2NH_2$, N-$C_{1-2}$-Alkylamino-sulfonyl, N,N-Dimethylaminosulfonyl, N-Methyl-N-β-hydroxyäthylaminosulfonyl, N-Methyl-N-cyclohexylaminosulfonyl, N-Phenylaminosulfonyl, N-o-Methylphenylaminosulfonyl, N-o-Chlorphenylaminosulfonyl, N-m-Trifluormethylphenylaminosulfonyl, N-Aethyl-N-phenylaminosulfonyl, $-CONH_2$ oder $-CON(CH_3)_2$, $R_3$ Methyl oder Phenyl und $R_4$ Wasserstoff, Methyl, Aethyl oder Octyl ist.

5. Monoazofarbstoffe gemäss Anspruch 2 der Formel

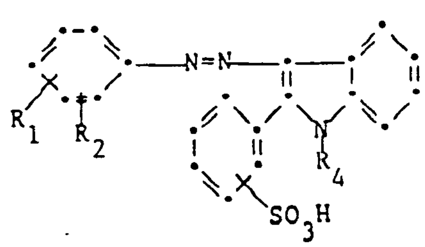

(3) ,

worin $R_1$, $R_2$ und $R_4$ die in Anspruch 2 angegebenen Bedeutungen haben.

6. Monoazofarbstoffe gemäss Anspruch 5, worin $R_1$ Wasserstoff, Methyl, Chlor, Methoxy, Phenoxy, Acetylamino, Phenylsulfonyl, Naphthylsulfonyl, p-Methylphenylsulfonyl oder p-Chlorphenylsulfonyl, $R_2$

Wasserstoff, Chlor, Trifluormethyl, $-SO_2NH_2$, N-Methyl-N-cyclohexylaminosulfonyl, Phenylaminosulfonyl oder N-Aethyl-N-phenylaminosulfonyl und $R_4$ Wasserstoff oder Methyl ist.

7. Monoazofarbstoffe gemäss Anspruch 3 der Formel

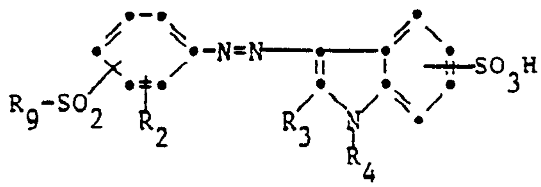

(4),

worin $R_2$, $R_3$ und $R_4$ die in Anspruch 3 angegebenen Bedeutungen haben und $R_9$ ein gegebenenfalls durch $C_{1-4}$-Alkyl und Halogen substituierter Phenylrest oder Naphthyl ist.

8. Monoazofarbstoffe gemäss Anspruch 7 worin $R_2$ Wasserstoff, $R_3$ Phenyl, $R_4$ Wasserstoff und $R_9$ Phenyl ist.

9. Der Monoazofarbstoff gemäss Anspruch 8 der Formel

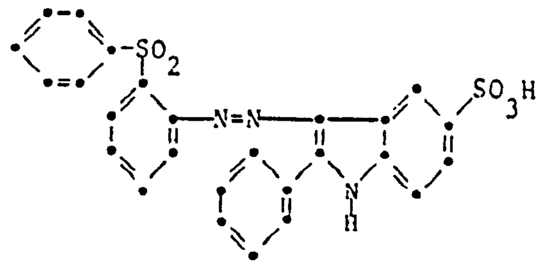

(5).

10. Verfahren zur Herstellung der Monoazofarbstoffe gemäss Anspruch 1, dadurch gekennzeichnet, dass man eine Diazokomponente der Formel

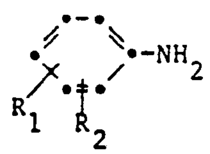

(6)

diazotiert und auf eine Kupplungskomponente der Formel

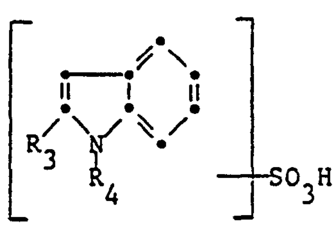

(7)

kuppelt, wobei $R_1$, $R_2$, $R_3$ und $R_4$ in den Formeln (6) und (7) die in Anspruch 1 angegebenen Bedeutungen haben.

11. Verwendung der Azofarbstoffe gemäss den Ansprüchen 1 bis 9 bzw. der gemäss Anspruch 10 erhaltenen Azofarbstoffe zum Färben und Bedrucken.

12. Verwendung der Monoazofarbstoffe gemäss Anspruch II zum Färben von Polyamidfasern.

**Claims**

1. A monoazo dye of the formula

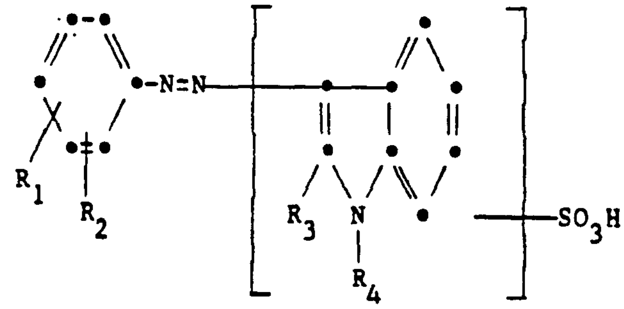

(1),

wherein $R_1$ is hydrogen, $C_1$-$C_4$alkyl, $C_1$-$C_4$alkoxy, halogen, $C_2$-$C_4$alk-anoylamino or is an unsubstituted or substituted arylsulfonyl, aryloxy or arylcarbonyl radical; $R_2$ is hydrogen, halogen, an unsubstituted or substituted alkyl, aryloxy or aryloxysulfonyl radical or a radical of the formula

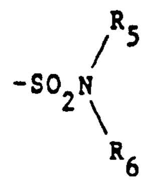

or

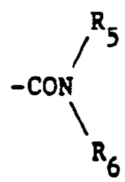

,

$R_3$ is an unsubstituted or substituted alkyl or aryl radical; $R_4$ is hydrogen or alkyl; and $R_5$ and $R_6$ are each independently hydrogen or an unsubstituted or substituted alkyl, cycloalkyl or aryl radical, with the proviso that $R_1$ may not be hydrogen,$C_1$-$C_4$alkyl, $C_1$-$C_4$alkoxy orhalogen if $R_2$ is an hydrogen,halogen, unsubstituted or substituted alkyl or aryloxysulfonyl radical or a radical of the formula $-SO_2N(R_5)(R_6)$ or $-CON(R_5)(R_6)$.

2. A monoazo dye according to claim 1, wherein $R_1$ is hydrogen, $C_1$-$C_4$alkyl, $C_1$-$C_4$alkoxy, halogen, $C_2$-$C_4$alkanoylamino, a phenylsulfonyl, naphthylsulfonyl, phenyloxy or phenylcarbonyl radical, each unsubstituted or substituted by $C_1$-$C_4$alkyl or halogen, $R_2$ is hydrogen, halogen, $C_1$-$C_4$alkyl, trifluoromethyl a phenoxy phenoxysulfonyl radical, each unsubstituted or substituted by $C_1$-$C_4$-alkyl or halogen, or is

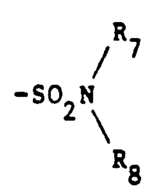

or

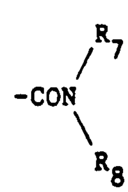

,

$R_3$ is $C_1$-$C_4$alkyl or phenyl, $R_4$ is hydrogen or $C_1$-$C_8$alkyl, and $R_7$ and $R_8$ are each independently hydrogen, $C_1$-$C_4$alkyl, $C_1$-$C_4$hydroxyalkyl, $C_5$-$C_7$cycloalkyl, phenyl or phenyl which is substituted by halogen, trifluoromethyl or $C_1$-$C_4$-alkyl.

3. A monoazo dye according to claim 2, of the formula

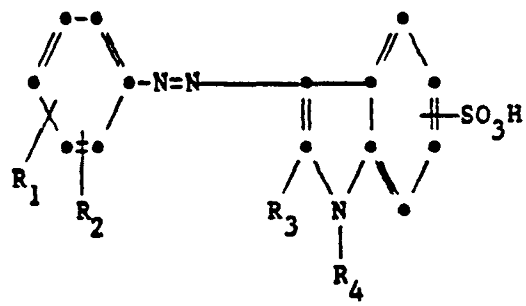

(2),

wherein $R_1$, $R_2$, $R_3$ and $R_4$ are as defined in claim 2.

4. A monoazo dye according to claim 3, wherein $R_1$ is hydrogen, methyl, chlorine, methoxy, ethoxy, o-methylphenoxy, phenoxy, acetylamino, phenylsulfonyl, p-methylphenylsulfonyl, p-chlorophenylsulfonyl, naphthylsulfonyl, p-methylbenzoyl or p-chlorobenzoyl, $R_2$ is hydrogen, chlorine, methyl, trifluoromethyl, o-methylphenoxy, o-chlorophenoxy, o-chlorophenoxysulfonyl, $-SO_2NH_2$, N-$C_1$-$C_2$alkyl-aminosulfonyl, N,N-dimethylaminosulfonyl N-methyl-N-D-hydroxyethylaminosulfonyl, N-methyl-N-cyclohexylaminosulfonyl, N-phenylaminosulfonyl, N-o-methylphenylaminosulfonyl, N-o-chlorophenylaminosulfonyl, N-m-trifluoromethylphenylaminosulfonyl, N-ethyl-N-phenylaminosulfonyl, $-CONH_2$ or $-CON(CH_3)_2$, $R_3$ is methyl or phenyl, and $R_4$ is hydrogen, methyl, ethyl or octyl.

5. A monoazo dye according to claim 2, of the formula

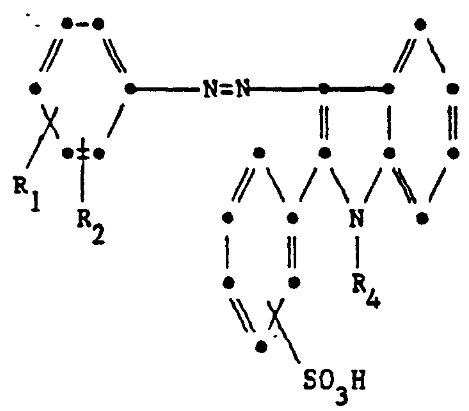

(3),

wherein $R_1$, $R_2$ and $R_4$ are as defined in claim 2.

6. A monoazo dye according to claim 5, wherein $R_1$ is hydrogen, methyl, chlorine, methoxy, phenoxy, acetylamino, phenylsulfonyl, naphthylsulfonyl, p-methylphenylsulfonyl or p-chlorophenylsulfonyl, $R_2$ is hydrogen, chlori e, trifluoromethyl, $-SO_2NH_2$, N-methyl-N-cyclohexylaminosulfonyl, phenylaminosulfonyl or Methyl-N-phenylaminosulfonyl, and $R_4$ is hydrogen or methyl.

7. A monoazo dye according to claim 3, of the formula

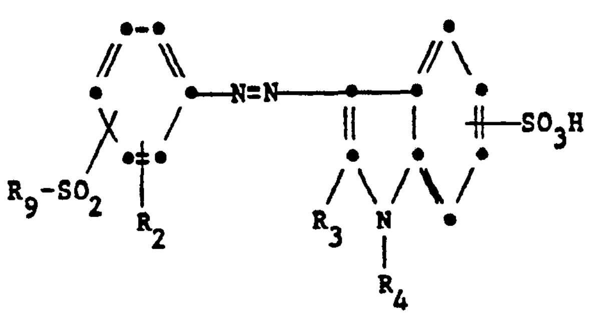

(4),

wherein $R_2$, $R_3$ and $R_4$ are as defined in claim 3 and $R_9$ is phenyl or phenyl substituted by $C_1$-$C_4$alkyl and halogen, or naphthyl.

8. A monoazo dye according to claim 7, wherein $R_2$ is hydrogen, $R_3$ is phenyl, $R_4$ is hydrogen and $R_9$ is phenyl.

9. The monoazo dye according to claim 8, of the formula

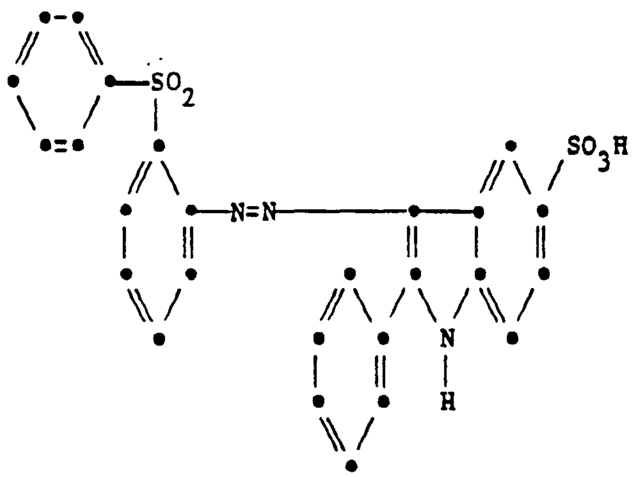

(5)

10. A process for the preparation of a monoazo dye according to claim 1, which comprises diazotising a diazo component of the formula

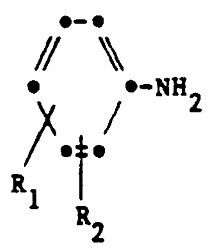

(6)

and coupling the diazonium compound to a coupling component of the formula

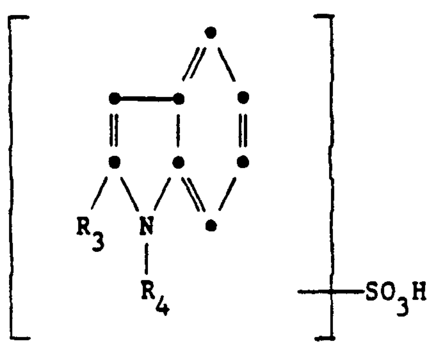

(7)

in which formulae (6) and (7) above $R_1$, $R_2$, $R_3$ and $R_4$ are as defined in claim 1.

11. A process for dyeing or printing, which comprises the use of an azo dye as claimed in any one of claims 1 to 9 and obtained according to claim 10.

12. A process according to claim 11 for dyeing polyamide fibres.

**Revendications**

1. Colorants monoazoïques de formule

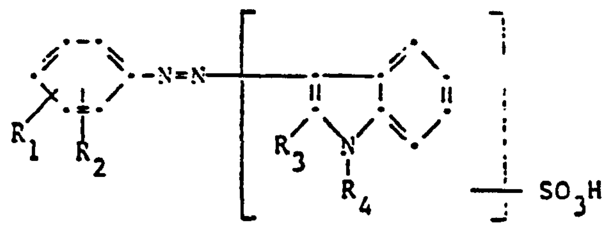

(1),

dans laquelle $R_1$ représente un atome d'hydrogène ou d'halogène, ou un groupe alkyle en $C_{1-4}$,alcoxy en $C_{1-4}$, alcanoylamino en $C_{2-4}$, ou un groupe arylsulfonyle, aryloxy, ou arylcarbonyle, éventuellement substitué, $R_2$ représente un atome d'hydrogène ou d'halogène ou un groupe alkyle, aryloxy, ou aryloxysulfonyle, éventuellement substitué, ou un groupe de formule

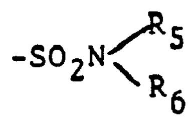

ou

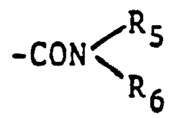

,

$R_3$ représente un groupe alkyle ou aryle éventuellement substitué, $R_4$ représente un atome d'hydrogène ou un groupe alkyle, et $R_5$ et $R_6$, indépendamment l'un de l'autre, représentent un atome d'hydrogène ou un groupe alkyle, cycloalkyle, ou aryle, éventuellement substitué, $R_1$ ne pouvant être ni un atome d'hydrogène ou d'halogène, ni un groupe alkyle en $C_{1-4}$ ou alcoxy en $C_{1-4}$, si $R_2$ représente un atome d'hydrogène ou d'halogène ou un groupe alkyle ou aryloxysulfonyle éventuellement substitué ou un groupe de formule $-SO_2N(R_5)R_6$ ou $-CON(R_5)R_6$.

2. Colorants monoazoïques conformes à la revendication 1, où $R_1$ représente un atome d'hydrogène ou d'halogène ou un groupe alkyle en $C_{1-4}$, alcoxy en $C_{1-4}$ ou alcanoylamino en $C_{2-4}$, ou un groupe phénylsulfonyle, naphtylsulfonyle, phényloxy ou phénylcarbonyle, éventuellement substitué par un groupe alkyle en $C_{1-4}$ ou par un atome d'halogène, $R_2$ représente un atome d'hydrogène ou d'halogène ou un groupe alkyle en $C_{1-4}$ ou trifluorométhyle, ou un groupe phénoxy ou phénoxysulfonyle, éventuellement substitue par un groupe alkyle en $C_{1-4}$ ou par un atome d'halogène, ou bien un groupe de formule

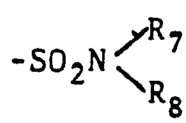

ou

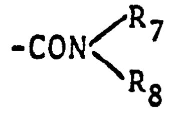

,

$R_3$ représente un groupe alkyle en $C_{1-4}$ ou phényle, $R_4$ représente un atome d'hydrogène ou un groupe alkyle en $C_{1-8}$, $R_7$ et $R_8$, indépendamment l'un de l'autre, étant un atome d'hydrogène ou un groupe alkyle en $C_{1-4}$, hydroxyalkyle en $C_{1-4}$, cycloalkyle en $C_{5-7}$, phenyle, ou phényle substitué par un atome d'halogène ou par un groupe trifluorométhyle ou alkyle en $C_{1-4}$.

3. Colorants monoazoïques conformes à la revendication 2, de formule

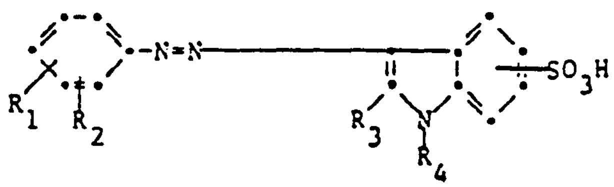

(2),

dans laquelle $R_1$, $R_2$, $R_3$ et $R_4$ ont les significations indiquées dans la revendication 2.

4. Colorants monoazoïques conformes à la revendication 3, dans lesquels $R_1$ représente un atome d'hydrogène ou de chlore ou un groupe méthyle, méthoxy, éthoxy, o-méthylphénoxy, phénoxy, acétylamino, phénylsulfonyle, p-méthylphénylsulfonyle, p-chlorophénylsulfonyle, naphtylsulfonyle, p-méthylbenzoyle, ou p-chlorobenzoyle, $R_2$ représente un atome d'hydrogène ou de chlore ou un groupe méthyle, trifluorométhyle, o-méthylphénoxy, o-chlorophénoxy, o-chlorophénoxysulfonyle, $-SO_2NH_2$, N-(alkyle en $C_{1-2}$)aminosulfonyle, N,N-diméthylaminosulfonyle, N-méthyl-N-β-hydroxyéthylaminosulfonyle, N-méthyl-N-cyclohexylaminosulfonyle, N-phénylaminosulfonyle, N-o-méthylphénylaminosulfonyle, N-o-chlorophénylaminosulfonyle, N-m-trifluorométhylphénylaminosulfonyle, N-éthyl-N-phénylaminosulfonyle, $-CONH_2$ ou $-CON(CH_3)_2$, $R_3$ représente un groupe méthyle ou phényle, et $R_4$ représente un atome d'hydrogène ou un groupe méthyle, éthyle, ou octyle.

5. Colorants monoazoïques conformes à la revendication 2, de formule

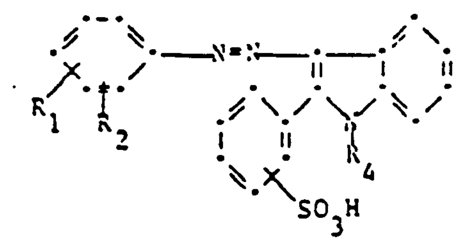

(3) ,

dans laquelle $R_1$, $R_2$ et $R_4$ ont les significations indiquées dans la revendication 2.

6. Colorants monoazoïques conformes à la revendication 5, dans lesquels $R_1$ représente un atome d'hydrogène ou de chlore ou un groupe méthyle, méthoxy, phénoxy, acétylamino, phénylsulfonyle, naphtylsulfonyle, p-méthylphénylsulfonyle ou p-chlorophénylsulfonyle, $R_2$ représente un atome d'hydrogène ou de chlore ou un groupe trifluorométhyle, $-SO_2NH_2$, N-méthyl-N-cyclohexylaminosulfonyle, phènylaminosulfonyle ou N-éthyl-N-phénylaminosulfonyle, et $R_4$ représente un atome d'hydrogène ou un groupe méthyle.

7. Colorants monoazoïques conformes à la revendication 3, de formule

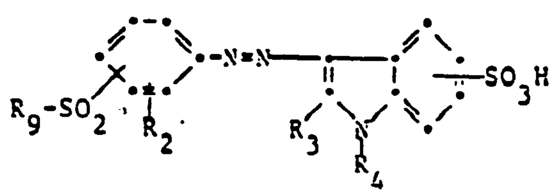

(4),

dans laquelle $R_2$, $R_3$ et $R_4$ ont les significations indiquées dans la revendication 3, et $R_9$ représente un groupe phényle ou naphtyle, éventuellement substitué par un atome d'halogène ou par un groupe alkyle en $C_{1-4}$.

8. Colorants monoazoïques conformes à la revendication 7, dans lesquels $R_2$ représente un atome d'hydrogène, $R_3$ représente un groupe phényle, $R_4$ représente un atome d'hydrogène et $R_9$ représente un groupe phényle.

9. Le colorant monoazoïque conforme à la revendication 8, de formule

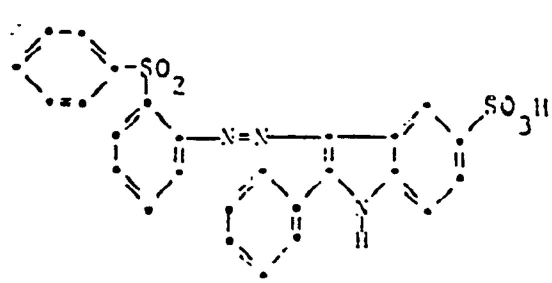

(5).

10. Procédé de préparation des colorants monoazoïques conformes à la revendication 1, caractérisé en ce que l'on diazote un composant diazo de formule

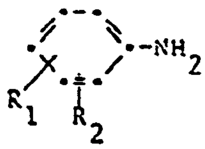

(6)

et qu'on le copule sur un composant de copulation de formule

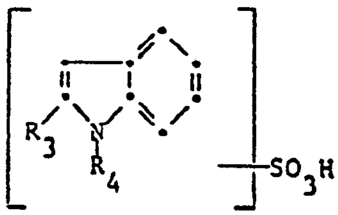

(7)

$R_1$, $R_2$, $R_3$ et $R_4$ ayant dans les formules (6) et (7) les significations indiquées dans la revendication 1.

11. Utilisation des colorants azoïques conformes aux revendications 1 à 9 ou des colorants azoïques obtenus conformément à la revendication 10, pour des teintures et des impressions.

12. Utilisation de colorants monoazoïques conformément à la revendication 11, pour la teinture de fibres en polyamide.